(19) Europäisches Patentamt
European Patent Office
Office européen des brevets

(11) **EP 4 262 301 A1**

(12) **EUROPEAN PATENT APPLICATION**
published in accordance with Art. 153(4) EPC

(43) Date of publication:
**18.10.2023 Bulletin 2023/42**

(21) Application number: **21920806.3**

(22) Date of filing: **15.12.2021**

(51) International Patent Classification (IPC):
**H04W 72/04** (2023.01)

(52) Cooperative Patent Classification (CPC):
**H04L 5/00; H04W 72/04**

(86) International application number:
**PCT/CN2021/138238**

(87) International publication number:
**WO 2022/156432 (28.07.2022 Gazette 2022/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.01.2021 CN 202110070788
16.03.2021 CN 202110280935**

(71) Applicant: **Huawei Technologies Co., Ltd.
Shenzhen, Guangdong 518129 (CN)**
(72) Inventors:
• **XUE, Yifan
Shenzhen, Guangdong 518129 (CN)**
• **KUANG, Yiru
Shenzhen, Guangdong 518129 (CN)**
• **XUE, Lixia
Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **SCHEDULING REQUEST TRANSMISSION METHOD AND APPARATUS**

(57) A scheduling request transmission method and an apparatus are provided, and are used in a communication system, for example, V2X, LTE-V, V2V, an internet of vehicles, MTC, LTE-M, M2M, and an internet of things. A terminal device determines that a first uplink channel exists in a first time domain range, combines a scheduling request with information included in the first uplink channel, to obtain first information, and transmits the first information to a network device. The first time domain range is related to a time domain position of a physical uplink control channel PUCCH including the scheduling request, and the first uplink channel is any one of the following: a PUCCH including a HARQ feedback, a PUCCH including a CSI report, or a PUSCH. In this way, a quantity of uplink transmission times of the terminal device can be reduced, so that power consumption of the terminal device is reduced.

FIG. 2

Processed by Luminess, 75001 PARIS (FR)

EP 4 262 301 A1

**Description**

**CROSS-REFERENCE TO RELATED APPLICATIONS**

This application claims priority to Chinese Patent Application No. 202110070788.3, filed with the China National Intellectual Property Administration on January 19, 2021 and entitled "SR TRANSMISSION METHOD", which is incorporated herein by reference in its entirety; and this application claims priority to Chinese Patent Application No. 20211028093 5.X, filed with the China National Intellectual Property Administration on March 16, 2021 and entitled "SCHEDULING REQUEST TRANSMISSION METHOD AND APPARATUS", which is incorporated herein by reference in its entirety.

**TECHNICAL FIELD**

This application relates to the field of communication technologies, and in particular, to a scheduling request transmission method and an apparatus.

**BACKGROUND**

A terminal device that supports a 5th generation new radio access technology (5th generation new radio access technology, 5G NR) usually needs to support a large bandwidth (for example, 100 megahertz (MHz)), a large quantity of antennas (for example, four reception (reception, RX) antennas and two transmission (transmission, TX) antennas), and a complex baseband processing procedure (for example, a polar (polar) code). As a result, power consumption of the terminal device is high. At present, to reduce power consumption of the terminal device, researches on power consumption reduction of the terminal device are becoming more common. However, in the current research, downlink transmission of the terminal device is mainly optimized, but uplink transmission of the terminal device is not optimized.

**SUMMARY**

This application provides a scheduling request transmission method and an apparatus, to propose how to optimize transmission of a scheduling request, so as to reduce power consumption of a terminal device.

According to a first aspect, this application provides a scheduling request transmission method. The method may include: After determining that a first uplink channel exists in a first time domain range, a terminal device combines a scheduling request and information included in the first uplink channel, to obtain first information; and finally, the terminal device transmits the first information to a network device. The first time domain range is related to a time domain position of a physical uplink control channel (physical uplink control channel, PUCCH) including a scheduling request, and the first uplink channel may be any one of the following: a PUCCH including a hybrid automatic repeat request (hybrid automatic repeat request, HARQ) feedback, a PUCCH including a channel state information (channel state information, CSI) report, or a physical uplink shared channel (physical uplink shared channel, PUSCH).

In the foregoing method, the scheduling request and the information included in the first uplink channel are combined for transmission, so that a quantity of uplink transmission times can be reduced, thereby reducing power consumption of the terminal device.

In a possible design, the first time domain range is a first time window and/or a second time window. A start moment of the first time window may be a moment triggered by receiving a scheduling request of a media access control (media access control, MAC) layer of the terminal device by a physical (physical, PHY) layer of the terminal device, and an end moment of the first time window may be the time domain position of the PUCCH including the scheduling request, or an end moment of the first time window may be the time domain position of the PUCCH including the scheduling request, and a time domain length of the first time window is a first time domain length. A start moment of the second time window may be the time domain position of the PUCCH including the scheduling request, and a time domain length of the second time window is a second time domain length. In this way, the first time domain range can be accurately determined, and further, whether the first uplink channel exists in the first time domain range can be accurately determined.

In a possible design, that a first uplink channel exists in a first time domain range may be specifically: The first uplink channel exists after the moment triggered by receiving the scheduling request of the MAC layer of the terminal device by the PHY layer of the terminal device and before the time domain position of the PUCCH including the scheduling request. In this way, whether the first uplink channel exists in the first time domain range can be accurately determined.

In a possible design, that a first uplink channel exists in a first time domain range may be specifically: The first uplink channel exists in the first time domain length before the time domain position of the PUCCH including the scheduling request. In this way, whether the first uplink channel exists in the first time domain range can be accurately determined.

In a possible design, that a first uplink channel exists in a first time domain range may be specifically: The first uplink channel exists in the second time domain length after the time domain position of the PUCCH including the scheduling request, where the first uplink channel is the PUCCH including the CSI report. In this way, whether the first uplink channel exists in the first time domain range can be accurately determined.

In a possible design, that a first uplink channel exists in a first time domain range may be specifically: The first uplink channel exists in the second time domain length after the time domain position of the PUCCH including the scheduling request, and a time domain position of DCI for scheduling or indicating transmission on the first uplink channel is before the time domain position of the PUCCH including the scheduling request, where the first uplink channel may be the PUCCH including the HARQ feedback or the PUSCH (for example, a PUSCH not including uplink data). In this way, whether the first uplink channel exists in the first time domain range can be accurately determined.

In a possible design, when a plurality of uplink channels exist in the first time domain range, the first uplink channel may be an uplink channel with an earliest time domain position in the plurality of uplink channels, or the first uplink channel may be an uplink channel that is in the plurality of uplink channels and whose time domain position is at a minimum interval with the time domain position of the PUCCH including the scheduling request. In this way, a unique position for transmitting the scheduling request can be determined, to avoid a case in which the network device and the terminal device cannot be aligned.

In a possible design, a slot in which the first uplink channel is located includes a scheduling request occasion. In this way, it can be ensured that the scheduling request is combined for transmission only in a specific slot, to avoid a case in which the network device assumes transmission of the scheduling request for each uplink signal or uplink channel.

In a possible design, when a format of the PUCCH including the scheduling request is a format 0 or a format 1, the first uplink channel is the PUCCH including the HARQ feedback, and a format of the PUCCH including the HARQ feedback is the format 0, that a terminal device combines a scheduling request and information included in the first uplink channel, to obtain first information may be specifically: The terminal device concatenates the scheduling request and the HARQ feedback to obtain the first information. Further, that the terminal device transmits the first information to a network device may be specifically: The terminal device maps the first information to a first cyclic shift value, and transmits the first information to the network device based on the first cyclic shift value. In this way, the terminal device can successfully combine the scheduling request and the information on the first uplink channel for transmission.

In a possible design, when a format of the PUCCH including the scheduling request is a format 0 or a format 1, the first uplink channel is the PUCCH including the HARQ feedback, and a format of the PUCCH including the HARQ feedback is a format 2, a format 3, or a format 4, that a terminal device combines a scheduling request and information included in the first uplink channel, to obtain first information may be specifically: The terminal device concatenates the scheduling request and the HARQ feedback to obtain the first information. Further, that the terminal device transmits the first information to a network device may be specifically: The terminal device transmits the first information to the network device through the first uplink channel. In this way, the terminal device can successfully combine the scheduling request and the information on the first uplink channel for transmission.

In a possible design, when a format of the PUCCH including the scheduling request is a format 0 or a format 1, the first uplink channel is the PUCCH including the CSI report, and a format of the PUCCH including the CSI report is a format 2, a format 3, or a format 4, that a terminal device combines a scheduling request and information included in the first uplink channel, to obtain first information may be specifically: The terminal device concatenates the scheduling request and the CSI report to obtain the first information. Further, that the terminal device transmits the first information to a network device may be specifically: The terminal device transmits the first information to the network device through the first uplink channel. In this way, the terminal device can successfully combine the scheduling request and the information on the first uplink channel for transmission.

In a possible design, when a format of the PUCCH including the scheduling request is a format 0, the first uplink channel is the PUCCH including the HARQ feedback, and a format of the PUCCH including the HARQ feedback is a format 1, that a terminal device combines a scheduling request and information included in the first uplink channel, to obtain first information may be specifically: The terminal device concatenates the scheduling request and the HARQ feedback to obtain the first information. Further, that the terminal device transmits the first information to a network device may be specifically: The terminal device maps the first information to a second cyclic shift value, and transmits the first information to the network device based on the second cyclic shift value. In this way, the terminal device can successfully combine the scheduling request and the information on the first uplink channel for transmission.

In a possible design, when a format of the PUCCH including the scheduling request is a format 1, the first uplink channel is the PUCCH including the HARQ feedback, and a format of the PUCCH including the HARQ feedback is the format 1, that the terminal device transmits the first information to a network device may be specifically: When determining that a resource of the PUCCH of the format 1 used to transmit the scheduling request exists at a time domain position of the first uplink channel, the terminal device transmits the first information to the network device in a channel selection manner. In this way, the terminal device can successfully combine the scheduling request and the information on the first uplink channel for transmission.

In a possible design, when a format of the PUCCH including the scheduling request is a format 0 or a format 1, and the first uplink channel is the PUSCH, that a terminal device combines a scheduling request and information included in the first uplink channel, to obtain first information may be specifically: The terminal device concatenates the scheduling request and the information included in the PUSCH to obtain the first information. Further, the terminal device transmits the first information to the network device through the first uplink channel. In this way, the terminal device can successfully combine the scheduling request and the information on the first uplink channel for transmission.

In a possible design, when a format of the PUCCH including the scheduling request is a format 0 or a format 1, and the first uplink channel is the PUSCH, that a terminal device combines a scheduling request and information included in the first uplink channel, to obtain first information may be specifically: The terminal device punctures the PUSCH, and maps the scheduling request to a punctured position of the PUSCH, to obtain the first information. Further, the terminal device transmits the first information to the network device through the first uplink channel. In this way, the terminal device can successfully combine the scheduling request and the information on the first uplink channel for transmission.

In a possible design, the terminal device receives a first message from the network device, where the first message is used to configure or enable a function of the terminal device for combining the scheduling request and the information included in the first uplink channel for transmission. In this way, the terminal device can combine the scheduling request and the information on the first uplink channel to the network device for transmission.

In a possible design, the terminal device transmits a second message to the network device, where the second message is used to request to enable a function of combining the scheduling request and the information on the first uplink channel for transmission. In this way, the terminal device can combine the scheduling request and the information on the first uplink channel to the network device for transmission.

In a possible design, the terminal device receives a third message from the network device, where the third message indicates the terminal device to combine, for transmission, the scheduling request and the information included in the first uplink channel. In this way, the terminal device can combine the scheduling request and the information on the first uplink channel to the network device for transmission.

In a possible design, before the terminal device combines the scheduling request with the information included in the first uplink channel, to obtain the first information, the terminal device determines a reference signal received power (reference signal received power, RSRP) transmitted to the network device after a reference signal is received from the network device is greater than an RSRP threshold, where the RSRP is determined by the terminal device based on the reference signal. In this way, transmission performance of the terminal device can be ensured.

In a possible design, that the terminal device transmits the first information to a network device may be specifically: The terminal device transmits the first information to the network device by using a first transmit power, where the first transmit power is greater than an original transmit power of the first uplink channel, or the first transmit power is determined based on an original transmit power of the first uplink channel and an original transmit power of the PUCCH including the scheduling request. In this way, average energy allocated to each bit can be improved, thereby ensuring transmission performance of the terminal device.

According to a second aspect, this application provides a scheduling request transmission method. The method may include: A network device determines that a first uplink channel exists in a first time domain range; and then, the network device receives first information from a terminal device, where the first information is obtained by the terminal device by combining a scheduling request and information included in the first uplink channel, the first time domain range is related to a time domain position of a PUCCH including a scheduling request, and the first uplink channel is any one of the following: a PUCCH including a HARQ feedback, a PUCCH including a CSI report, or a PUSCH.

In the foregoing method, the scheduling request and the information included in the first uplink channel are combined for transmission, so that a quantity of uplink transmission times of the terminal device can be reduced, thereby reducing power consumption of the terminal device.

In a possible design, the first time domain range may be a first time window and/or a second time window. A start moment of the first time window may be a moment triggered by receiving a scheduling request of a MAC layer of the terminal device by a PHY layer of the terminal device, and an end moment of the first time window may be a start position of the time domain position of the PUCCH including the scheduling request, or an end moment of the first time window may be a start position of the time domain position of the PUCCH including the scheduling request, and a time domain length of the first time window may be a first time domain length. A start moment of the second time window may be an end start position of the time domain position of the PUCCH including the scheduling request, and a time domain length of the second time window may be a second time domain length. In this way, the first time domain range can be accurately determined, and further, whether the first uplink channel exists in the first time domain range can be accurately determined.

In a possible design, that a first uplink channel exists in a first time domain range may be specifically: The first uplink channel exists after the moment triggered by receiving the scheduling request of the MAC layer of the terminal device by the PHY layer of the terminal device and before the time domain position of the PUCCH including the scheduling request. In this way, whether the first uplink channel exists in the first time domain range can be accurately determined.

In a possible design, that a first uplink channel exists in a first time domain range may be specifically: The first uplink channel exists in the first time domain length before the time domain position of the PUCCH including the scheduling request. In this way, whether the first uplink channel exists in the first time domain range can be accurately determined.

In a possible design, that a first uplink channel exists in a first time domain range may be specifically: The first uplink channel exists in the second time domain length after the time domain position of the PUCCH including the scheduling request, where the first uplink channel is the PUCCH including the CSI report. In this way, whether the first uplink channel exists in the first time domain range can be accurately determined.

In a possible design, that a first uplink channel exists in a first time domain range may be specifically: The first uplink channel exists in the second time domain length after the time domain position of the PUCCH including the scheduling request, and a time domain position of DCI for scheduling or indicating transmission on the first uplink channel is before the time domain position of the PUCCH including the scheduling request, where the first uplink channel may be the PUCCH including the HARQ feedback or the PUSCH (for example, a PUSCH not including uplink data). In this way, whether the first uplink channel exists in the first time domain range can be accurately determined.

In a possible design, when a plurality of uplink channels exist in the first time domain range, the first uplink channel may be an uplink channel with an earliest time domain position in the plurality of uplink channels, or the first uplink channel may be an uplink channel that is in the plurality of uplink channels and whose time domain position is at a minimum interval with the time domain position of the PUCCH including the scheduling request. In this way, a unique position for transmitting the scheduling request can be determined, to avoid a case in which the network device and the terminal device cannot be aligned.

In a possible design, a slot in which the first uplink channel is located includes a scheduling request occasion. In this way, it can be ensured that the scheduling request is combined for transmission only in a specific slot, to avoid a case in which the network device assumes transmission of the scheduling request for each uplink signal or uplink channel.

In a possible design, when the first uplink channel is the PUCCH including the HARQ feedback, and a format of the PUCCH including the HARQ feedback is a format 0, the first information is obtained by the terminal device by concatenating the scheduling request and the HARQ feedback. That the network device receives first information from a terminal device may be specifically: The network device receives the first information transmitted by the terminal device based on a first cyclic shift value, where the first cyclic shift value is obtained by the terminal device by mapping the first information. In this way, the network device can successfully receive information used for combined transmission of the scheduling request and the information on the first uplink channel.

In a possible design, when a format of the PUCCH including the scheduling request is a format 0 or a format 1, the first uplink channel is the PUCCH including the HARQ feedback, and a format of the PUCCH including the HARQ feedback is a format 2, a format 3, or a format 4, the first information is obtained by the terminal device by concatenating the scheduling request and the HARQ feedback. That the network device receives first information from a terminal device may be specifically: The network device receives the first information transmitted by the terminal device through the first uplink channel. In this way, the network device can successfully receive information used for combined transmission of the scheduling request and the information on the first uplink channel.

In a possible design, when a format of the PUCCH including the scheduling request is a format 0 or a format 1, the first uplink channel is the PUCCH including the CSI report, and a format of the PUCCH including the CSI report is a format 2, a format 3, or a format 4, the first information is obtained by the terminal device by concatenating the scheduling request and the CSI report. That the network device receives the first information from a terminal device may be specifically: The network device receives the first information transmitted by the terminal device through the first uplink channel. In this way, the network device can successfully receive information used for combined transmission of the scheduling request and the information on the first uplink channel.

In a possible design, when a format of the PUCCH including the scheduling request is a format 0, the first uplink channel is the PUCCH including the HARQ feedback, and a format of the PUCCH including the HARQ feedback is a format 1, the first information is obtained by the terminal device by concatenating the scheduling request and the HARQ feedback. That the network device receives first information from a terminal device may be specifically: The network device receives the first information transmitted by the terminal device based on a second cyclic shift value, where the second cyclic shift value is obtained by the terminal device by mapping the first information. In this way, the network device can successfully receive information used for combined transmission of the scheduling request and the information on the first uplink channel.

In a possible design, when a format of the PUCCH including the scheduling request is a format 1, the first uplink channel is the PUCCH including the HARQ feedback, and a format of the PUCCH including the HARQ feedback is the format 1, that the network device receives first information from a terminal device may be specifically: when a resource of the PUCCH of the format 1 used to transmit the scheduling request exists at a time domain position of the first uplink channel, receiving the first information transmitted by the terminal device in a channel selection manner. In this way, the network device can successfully receive information used for combined transmission of the scheduling request and the information on the first uplink channel.

In a possible design, when a format of the PUCCH including the scheduling request is a format 0 or a format 1, and the first uplink channel is the PUSCH, the first information is obtained by the terminal device by concatenating the scheduling request and the information included in the PUSCH. The network device may receive the first information transmitted by the terminal device through the first uplink channel. In this way, the network device can successfully receive information used for combined transmission of the scheduling request and the information on the first uplink channel.

In a possible design, when a format of the PUCCH including the scheduling request is a format 0 or a format 1, and the first uplink channel is the PUSCH, the first information is obtained by the terminal device by puncturing the PUSCH and mapping the scheduling request to a punctured position of the PUSCH. The network device may receive the first information transmitted by the terminal device through the first uplink channel. In this way, the network device can successfully receive information used for combined transmission of the scheduling request and the information on the first uplink channel.

In a possible design, the network device transmits a first message to the terminal device, where the first message is used to configure a function of the terminal device for combining, for transmission, the scheduling request and the information included in the first uplink channel. In this way, the network device can receive information used for combined transmission of the scheduling request and the information on the first uplink channel.

In a possible design, the network device receives a second message transmitted by the terminal device, where the second message is used to request a function of combining, for transmission, the scheduling request and the information included in the first uplink channel. In this way, the network device can receive information used for combined transmission of the scheduling request and the information on the first uplink channel.

In a possible design, the network device transmits a third message to the terminal device, where the third message indicates the terminal device to combine, for transmission, the scheduling request and the information included in the first uplink channel. In this way, the network device can receive information used for combined transmission of the scheduling request and the information on the first uplink channel.

In a possible design, before the network device receives the first information from the terminal device, the network device determines that the RSRP from the terminal device is greater than the RSRP threshold, where the RSRP is transmitted by the terminal device after the terminal device receives the reference signal from the network device, and the RSRP is determined by the terminal device based on the reference signal. In this way, transmission performance can be ensured.

According to a third aspect, this application further provides a communication apparatus. The communication apparatus may be a terminal device, and the communication apparatus has a function of implementing the terminal device in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform corresponding functions of the terminal device in the first aspect or the possible design examples of the first aspect. For details, refer to detailed descriptions in the method examples. Details are not described herein again.

In a possible design, a structure of the communication apparatus includes a transceiver and a processor, and optionally further includes a memory. The transceiver is configured to transmit and receive data or information, and is configured to communicate and interact with another device in a communication system. The processor is configured to support the communication apparatus in performing corresponding functions of the terminal device in the first aspect or the possible design examples of the first aspect. The memory is coupled to the processor, and stores program instructions and data that are necessary for the communication apparatus.

According to a fourth aspect, this application further provides a communication apparatus. The communication apparatus may be a network device, and the communication apparatus has a function of implementing the network device in the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus may include a transceiver unit and a processing unit. These units may perform corresponding functions of the network device in the second aspect or the possible design examples of the second aspect. For details, refer to detailed descriptions in the method examples. Details are not described herein again.

In a possible design, a structure of the communication apparatus includes a transceiver and a processor, and optionally further includes a memory. The transceiver is configured to transmit and receive data or information, and is configured to communicate and interact with another device in a communication system. The processor is configured to support the communication apparatus in performing corresponding functions of the network device in the second aspect or the possible design examples of the second aspect. The memory is coupled to the processor, and stores program instructions and data that are necessary for the communication apparatus.

According to a fifth aspect, an embodiment of this application provides a communication system. The communication system may include the terminal device and the network device mentioned above.

According to a sixth aspect, an embodiment of this application provides a computer-readable storage medium. The computer-readable storage medium stores program instructions, and when the program instructions are run on a computer, the computer is enabled to perform the method in the first aspect or the possible design examples of the first aspect, or the method in the second aspect or the possible design examples of the second aspect according to embodiments of this application. For example, the computer-readable storage medium may be any usable medium accessible to the computer. By way of example and not limitation, the computer-readable medium may include a non-transient computer-readable medium, a random access memory (random-access memory, RAM), a read-only memory (read-only memory, ROM), an electrically erasable programmable read-only memory (electrically EPROM, EEPROM), a CD-ROM or another optical disc storage, a magnetic disk storage medium or another magnetic storage device, or any other medium that can be used to carry or store expected program code in a form of an instruction or a data structure and can be accessed by the computer.

According to a seventh aspect, an embodiment of this application provides a computer program product including computer program code or instructions. When the computer program product runs on a computer, the computer is enabled to implement the method in the first aspect or the possible design examples of the first aspect, or the second aspect or the possible design examples of the second aspect.

According to an eighth aspect, this application further provides a chip. The chip is coupled to a memory, and is configured to read and execute program instructions stored in the memory, to implement the foregoing first aspect or each possible design example of the first aspect, or the foregoing second aspect or each possible design example method of the second aspect.

For the third aspect to the eighth aspect and technical effect that can be achieved in the third aspect to the eighth aspect, refer to descriptions of technical effect that can be achieved in the possible solutions in the first aspect or the second aspect. Details are not described herein again.

**BRIEF DESCRIPTION OF DRAWINGS**

FIG. 1 is a schematic diagram of an architecture of a communication system according to this application;
FIG. 2 is a flowchart of a scheduling request transmission method according to this application;
FIG. 3 is a schematic diagram of a first time window and a second time window according to this application;
FIG. 4 is a schematic diagram of transmission of a scheduling request according to this application;
FIG. 5 is another schematic diagram of transmission of a scheduling request method according to this application;
FIG. 6 is another schematic diagram of transmission of a scheduling request method according to this application;
FIG. 7 is another schematic diagram of transmission of a scheduling request method according to this application;
FIG. 8 is another schematic diagram of transmission of a scheduling request method according to this application;
FIG. 9 is another schematic diagram of transmission of a scheduling request method according to this application;
FIG. 10 is a schematic flowchart of transmission of a scheduling request according to this application;
FIG. 11 is another schematic flowchart of transmission of a scheduling request method according to this application;
FIG. 12 is another schematic flowchart of transmission of a scheduling request method according to this application;
FIG. 13 is another schematic flowchart of transmission of a scheduling request method according to this application;
FIG. 14 is a schematic diagram of a time window 1 and a time window 2 according to this application;
FIG. 15 is a schematic diagram of transmission of an SR according to this application;
FIG. 16 is another schematic diagram of transmission of an SR method according to this application;
FIG. 17 is another schematic diagram of transmission of an SR method according to this application;
FIG. 18 is another schematic diagram of transmission of an SR method according to this application;
FIG. 19 is another schematic diagram of transmission of an SR method according to this application;
FIG. 20 is a schematic flowchart of transmission of an SR according to this application;
FIG. 21 is another schematic flowchart of transmission of an SR method according to this application;
FIG. 22 is another schematic flowchart of transmission of an SR method according to this application;
FIG. 23 is another schematic flowchart of transmission of an SR method according to this application;
FIG. 24 is a schematic diagram of a structure of a communication apparatus according to this application; and
FIG. 25 is a diagram of a structure of a communication apparatus according to this application.

## DESCRIPTION OF EMBODIMENTS

The following further describes in detail this application with reference to accompanying drawings.

Embodiments of this application provide a scheduling request transmission method and an apparatus, to propose how to optimize transmission of a scheduling request, so as to reduce power consumption of a terminal device. The method and the apparatus in this application are based on a same technical concept. Because problem-resolving principles of the method and the apparatus are similar, mutual reference may be made to implementations of the apparatus and the method, and repeated parts are not described again.

In the descriptions of this application, terms such as "first" and "second" are only for distinction and description, but cannot be understood as indicating or implying relative importance, or as indicating or implying an order.

In the descriptions of this application, "at least one item (piece, type)" refers to one item (piece, type) or more items (pieces, types), and a plurality of items (pieces, types) refers to two items (pieces, types) or more than two items (pieces, types).

To describe the technical solutions in embodiments of this application more clearly, the following describes in detail the scheduling request transmission method and the apparatus provided in embodiments of this application with reference to the accompanying drawings.

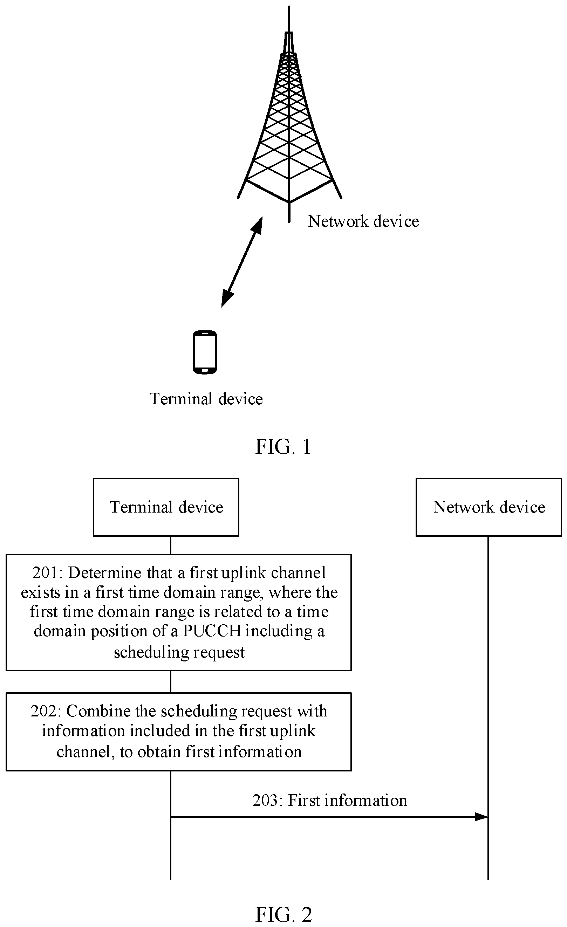

FIG. 1 shows an architecture of a communication system according to an embodiment of this application. The architecture of the communication system includes a network device and a terminal device.

The network device is a device that has a wireless transceiver function or a chip that can be disposed in the network device. The network device includes but is not limited to a base station (generation NodeB, gNB), a radio network controller (radio network controller, RNC), a NodeB (NodeB, NB), a base station controller (base station controller, BSC), a base transceiver station (base transceiver station, BTS), a home evolved NodeB (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission and reception point (transmission and reception point, TRP, or transmission point, TP). The network device may alternatively be a network node that constitutes a gNB or a transmission point, for example, a baseband unit (BBU), or a distributed unit (distributed unit, DU).

In some deployments, the gNB may include a central unit (central unit, CU) and a DU. The gNB may further include a radio frequency unit (radio unit, RU). The CU implements a part of functions of the gNB, and the DU implements a part of the functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical layer (physical layer, PHY). Information at the RRC layer eventually becomes information at the PHY layer, or is converted from the information at the PHY layer. Therefore, in the architecture, higher layer signaling such as RRC layer signaling or PDCP layer signaling may also be considered as being transmitted by the DU or transmitted by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer with a wireless transceiver function, a virtual reality (virtual reality, VR) terminal device, augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in a smart city (smart city), a smart wearable device (smart glasses, a smart watch, a smart headset, and the like), a wireless terminal in a smart home (smart home), or the like, or may be a chip, a chip module (or a chip system), or the like that can be disposed in the foregoing device. An application scenario is not limited in embodiments of this application. A terminal device having a wireless transceiver function and a chip that may be disposed in the terminal device are collectively referred to as a terminal device in this application.

It should be noted that the communication system shown in FIG. 1 may be but is not limited to a 4th generation (4th Generation, 4G) system or a 5th generation (5th Generation, 5G) system, for example, a new radio access technology (new radio access technology, NR). Optionally, the method in embodiments of this application is further applicable to various future communication systems, for example, a 6th generation (6th Generation, 6G) system or another communication network.

Currently, in some embodiments, NR uplink transmission and a related procedure may be described as follows.

1. Uplink data: The uplink data is carried on a physical uplink shared channel (physical uplink shared channel, PUSCH) for transmission.

(1) A time domain position of PUSCH transmission is usually indicated by downlink control information (downlink control information, DCI) transmitted by the network device to the terminal device. Specifically, if the network device transmits one piece of DCI in a slot n, and the DCI indicates one K2 value, the terminal device transmits the PUSCH in a slot n+K2. A PUSCH scheduled by using DCI is generally referred to as dynamic data scheduling. (2) There is another PUSCH transmission manner in a standard, which is a configured grant (configured grant, CG) transmission manner. The CG may be classified into two cases. In one case, a transmission parameter of the PUSCH is configured for the terminal device by using radio resource control (radio resource control, RRC) signaling of the network device. When the terminal device needs to transmit uplink data, the terminal device transmits the uplink data by using a preconfigured PUSCH. In the other case, some transmission parameters of the PUSCH are configured by using RRC signaling of the network device, and a remaining transmission parameter is indicated by DCI. When the network device transmits the DCI to activate transmission of the PUSCH, the terminal device periodically transmits the PUSCH based on a configured period value until the network device transmits another piece of DCI to stop transmission of the PUSCH by the terminal device. Therefore, in the CG transmission manner, there may be a case in which there is only the PUSCH and no DCI.

2. Hybrid automatic repeat request (hybrid automatic repeat request, HARQ) feedback: The HARQ feedback is usually carried on a PUCCH for transmission. A time domain position of the PUCCH carrying the HARQ feedback may be indicated by DCI, and the DCI is transmitted by the network device to the terminal device. Specifically, if the network device transmits one piece of DCI in a slot n to schedule transmission of downlink data, and the DCI indicates one K0 value and one K1 value, the terminal device receives a physical downlink shared channel (physical downlink shared channel, PDSCH) in a slot n+K0, where the PDSCH includes the downlink data, and the terminal device transmits, in a slot n+K0+K1, a HARQ feedback corresponding to the PDSCH. The HARQ feedback may be transmitted by using a PUCCH format (format) 0/1/2/3/4.

3. Channel state information (channel state information, CSI) report (CSI report): After receiving a CSI reference signal (reference signal, RS) (CSI-RS) transmitted by the network device, the terminal device transmits the CSI report to the network device. CSI reports can be classified into the following three types.

(1) Periodic CSI report (periodic CSI report, P-CSI report): The periodic CSI report is usually transmitted on a PUCCH. Once the network device configures the periodic CSI report for the terminal device, the terminal device transmits the CSI report based on a configured period. That is, a time domain position of the periodic CSI report is semi-statically configured by using RRC signaling. The periodic CSI report may be transmitted by using a PUCCH format 2/3/4.

(2) Semi-persistence CSI report (semi-persistence CSI report, SP-CSI report): Like a periodic CSI report, the semi-persistence CSI report is usually transmitted on a PUCCH. However, a difference between the semi-persistence CSI report and the periodic CSI report lies in that, after the network device configures the semi-persistence CSI report for the terminal device, the semi-persistence CSI report further needs to be activated. After activation, a time domain position of the semi-persistence CSI report can be considered to be semi-statically configured by using RRC signaling. The semi-persistence CSI report may be transmitted by using a PUCCH format 2/3/4.

(3) Aperiodic CSI report (aperiodic CSI report, AP-CSI report): The aperiodic CSI report is transmitted on a PUSCH and is triggered by DCI. Specifically, if the network device transmits one piece of DCI in a slot n, in addition to indicating a K2 value, the DCI may further include one piece of aperiodic CSI trigger information. If the DCI includes the aperiodic CSI trigger information, the terminal device carries the aperiodic CSI report on the scheduled PUSCH.

4. Scheduling request (scheduling request, SR): The SR is carried on a PUCCH for transmission. The network device configures, for the terminal device, one or more PUCCH resources used to transmit the SR, and each PUCCH resource appears periodically. When the terminal device needs to transmit uplink data, a media access control (media access control, MAC) layer in the terminal device determines an SR transmission occasion (SR transmission occasion), and transmits an indication to a physical (physical, PHY) layer in the terminal device. The PHY layer transmits the SR on the SR transmission occasion. The SR may be transmitted by using a PUCCH format 0/1.

At present, there are five PUCCH formats: formats 0, 1, 2, 3, and 4. The format 0 and the format 1 can carry information of 1 bit or 2 bits, and the format 2/3/4 can carry information of more than 2 bits. The format 0 and the format 2 occupy one or two orthogonal frequency division multiplexing (orthogonal frequency division multiplexing, OFDM) symbols in time domain. Therefore, the format 0/2 may be referred to as a short PUCCH (short PUCCH). The format 1/3/4 occupies four or more OFDM symbols in time domain. Therefore, the format 1/3/4 may be referred to as a long PUCCH (long PUCCH). The PUCCH format may be abbreviated as PF.

In this application, to reduce power consumption of the terminal device, it is proposed that the foregoing uplink transmission may be optimized. Specifically, a scheduling request transmission method is mainly described in detail in this application. It should be noted that the scheduling request may be a scheduling request (scheduling request, SR) in 5G. In a subsequent communication system or network, for example, 6G, the SR may still be used, or may have another name. This is not limited in this application.

It should be noted that an operation implemented by the terminal device in the following embodiments may also be implemented by using a processor, a chip or a chip system, a functional module, or the like in the terminal device, and an operation implemented by the network device may also be implemented by using a processor, a chip, a chip system, a functional module, or the like in the network device.

Based on the foregoing descriptions, the scheduling request transmission method provided in this embodiment of this application is applicable to the communication system shown in FIG. 1. Refer to FIG. 2. A specific procedure of the method may include the following steps.

Step 201: The terminal device determines that a first uplink channel exists in a first time domain range. The first time domain range is related to a time domain position of a PUCCH including a scheduling request, and the first uplink channel may be any one of the following: a PUCCH that includes a HARQ feedback, a PUCCH including a CSI report, or a PUSCH.

The PUSCH may be a PUSCH including no uplink data, for example, a PUSCH including no uplink shared channel (uplink shared channel, UL-SCH). The HARQ feedback may be an acknowledgment (acknowledgment, ACK) or a negative acknowledgment (negative acknowledgment, NACK).

Step 202: The terminal device combines the scheduling request with information included in the first uplink channel, to obtain first information.

Step 203: The terminal device transmits the first information to the network device.

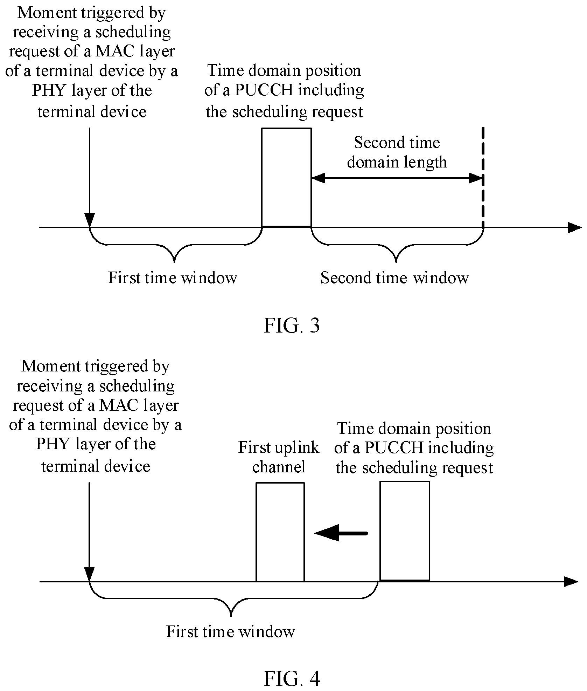

In an optional implementation, the first time domain range may be a first time window (window 1) and/or a second time window (window 2). A start moment of the first time window may be a moment triggered by receiving a scheduling request of the MAC layer of the terminal device by the PHY layer of the terminal device. An end moment of the first time window may be the time domain position of the PUCCH including the scheduling request (which may also be referred to as a scheduling request occasion (occasion) or a PUCCH resource including the scheduling request). Alternatively, an end moment of the first time window may be the time domain position of the PUCCH including the scheduling request, and a time domain length of the first time window may be a first time domain length. A start moment of the second time window may be the time domain position of the PUCCH including the scheduling request, and a time domain length of the second time window may be a second time domain length. For example, an example of the first time window and the second time window may be shown in FIG. 3.

Optionally, the time domain position of the PUCCH including the scheduling request may be specifically a start position of the time domain position of the PUCCH, or may be an end position of the time domain position of the PUCCH, or may be an intermediate position of the time domain position of the PUCCH, or the like. This is not limited in this application.

In an example, the first time domain length or the second time domain length may be one or more symbols (symbols), one or more slots (slots), or the like.

By using the first time window and/or the second time window, it can be ensured that the scheduling request may be combined and transmitted on an uplink channel (namely, the first uplink channel) at a nearby time domain position, to reduce a quantity of uplink transmission times of the terminal device, and reduce power consumption of uplink transmission of the terminal device. Specifically, if the first time window is located before the time domain position of the PUCCH including the scheduling request, the first time window can be used to ensure that the uplink channel is in a period of time before the scheduling request. In one case, the start moment of the first time window may be the moment triggered by receiving the scheduling request of the MAC layer of the terminal device by the PHY layer of the terminal device. If the terminal device transmits the scheduling request according to the procedure in a current embodiment, that is, does not combine the scheduling request, after generating the scheduling request, the terminal device transmits the scheduling request on the time domain position of the PUCCH including the scheduling request. If there is another uplink channel (namely, the first uplink channel) in the first time window, the terminal device may combine the generated scheduling request into the uplink channel, and does not need to transmit the scheduling request on the time domain position of the PUCCH including the scheduling request. In this way, power consumption of uplink transmission of the terminal device can be reduced, and the scheduling request can be transmitted in advance to reduce an overall communication delay. In another case, the end moment of the first time window may be the time domain position of the PUCCH including the scheduling request, and the time domain length of the first time window may be the first time domain length. A time point at which the MAC layer of the terminal device triggers transmission of the scheduling request is unknown to the network device. Therefore, from a perspective of the network device, the end moment of the first time window starts from the time domain position of the PUCCH including the scheduling request, and it is considered that previously, the uplink channel in the first time domain length may carry a combined scheduling request. In this case, the first time domain length may be understood as a maximum value of a time range (namely, a time domain range) in which transmission of the scheduling request is triggered by the MAC layer of the terminal device.

The second time window is located after the time domain position of the PUCCH including the scheduling request, that is, the second time window can be used to ensure that the uplink channel is in a period of time after the scheduling request. The second time window can ensure that a transmission delay of the scheduling request is not excessively long, that is, the overall communication delay is not excessively increased by using the combined transmission method in this application. In this case, the second time domain length may be understood as a time domain length determined based on a maximum data transmission delay (or data transmission delay budget).

It should be noted that a time window may also be referred to as a time domain range, a time range, or the like. This is not limited in this application.

For example, the first time window and the second time window may be predefined in a standard, or may be configured by the network device for the terminal device, or may be determined in another manner. This is not limited in this application.

Specifically, that a first uplink channel exists in a first time domain range may include the following four cases.

Case a1: The first uplink channel exists after the moment triggered by receiving the scheduling request of the MAC layer of the terminal device by the PHY layer of the terminal device and before the time domain position of the PUCCH including the scheduling request. In other words, the first uplink channel is in the first time window. For example, in Case a1, transmission of the scheduling request may be shown in FIG. 4.

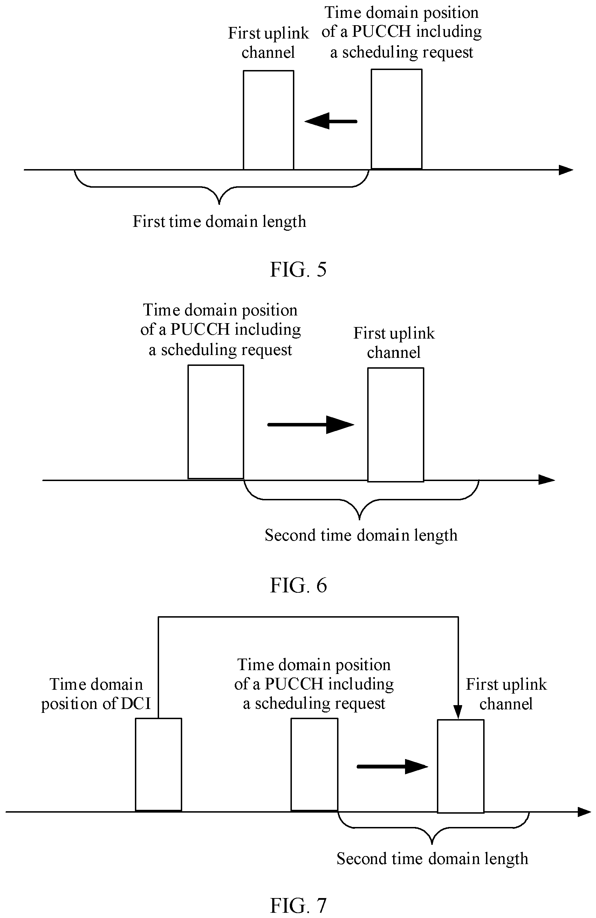

Case a2: The first uplink channel exists in the first time domain length before the time domain position of the PUCCH including the scheduling request. In other words, the first uplink channel is in the first time window. For example, in Case a2, transmission of the scheduling request may be shown in FIG. 5.

It should be noted that Case a1 and Case a2 are related to different interpretations of the foregoing first time window. Case a1 corresponds to a case in which the start moment of the first time window is the moment triggered by receiving the scheduling request of the MAC layer of the terminal device by the PHY layer of the terminal device, and the end moment of the first time window is the time domain position of the PUCCH including the scheduling request. Case a2 corresponds to a case in which the end moment of the first time window is the time domain position of the PUCCH including the scheduling request, and the time domain length of the first time window may be the first time domain length.

Case a3: The first uplink channel exists in the second time domain length after the time domain position of the PUCCH including the scheduling request. In other words, the first uplink channel is in the second time window. For example, in Case a3, transmission of the scheduling request may be shown in FIG. 6.

For example, in Case a3, the first uplink channel may be the PUCCH including the CSI report. Because the PUCCH including the CSI report is semi-statically configured, the terminal device may determine in advance that there is such a PUCCH (namely, the first uplink channel) available in a specific range after the PUCCH including the scheduling request. Then, the scheduling request may be successfully combined, for transmission, into the PUCCH including the CSI report.

Case a4: The first uplink channel exists in the second time domain length after the time domain position of the PUCCH including the scheduling request, and a time domain position of DCI for scheduling or indicating transmission on the first uplink channel is before the time domain position of the PUCCH including the scheduling request. In other words, the first uplink channel is in the second time window. For example, in Case a4, transmission of the scheduling request may be shown in FIG. 7.

For example, in Case a4, the first uplink channel may be the PUCCH including the HARQ feedback or the PUSCH (for example, the PUSCH including no uplink data). In Case a4, although transmission on the first uplink channel is dynamically scheduled instead of semi-statically configured, the DCI for scheduling transmission on the first uplink channel is located before the PUCCH including the scheduling request. To be specific, before the PUCCH including the scheduling request, the terminal device can determine whether there is an available first uplink channel in the subsequent second time window. If there is an available first uplink channel, the terminal device may combine the scheduling request into the first uplink channel. If there is no available first uplink channel, the terminal device transmits the scheduling request through the original PUCCH including the scheduling request.

Certainly, that a first uplink channel exists in a first time domain range may include other cases. Case a1 to Case a4 are merely examples. The other cases are not listed one by one herein.

In an optional implementation, when a plurality of uplink channels exist in the first time domain range, the first uplink channel may be an uplink channel with an earliest time domain position in the plurality of uplink channels, or the first uplink channel may be an uplink channel that is in the plurality of uplink channels and whose time domain position is at a minimum interval with the time domain position of a PUCCH including a scheduling request. In this way, a unique position for transmitting the scheduling request can be determined, to avoid a case in which the network device and the terminal device cannot be aligned.

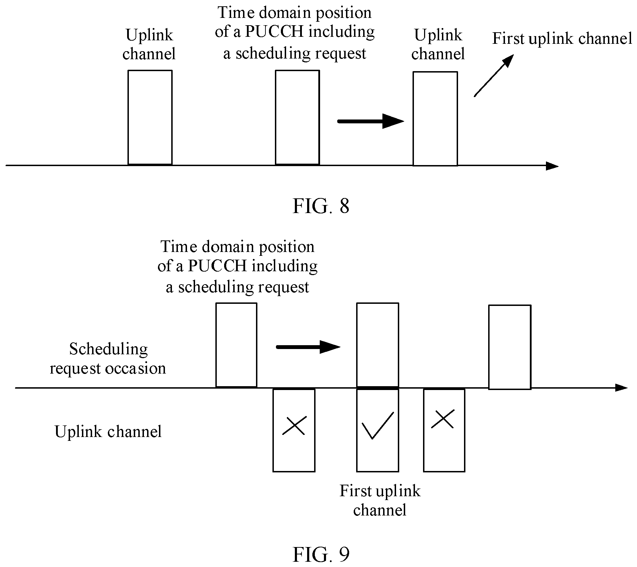

In an optional implementation, when a plurality of uplink channels exist in the first time domain range, the first uplink channel may be any one of the plurality of uplink channels, for example, as shown in FIG. 8.

In an optional implementation, a slot in which the first uplink channel is located includes a scheduling request occasion (occasion). That is, when a plurality of uplink channels exist in the first time domain range, an uplink channel that is in a slot in which the plurality of uplink channels are located and that includes the scheduling request occasion is used as the first uplink channel, for example, as shown in FIG. 9.

During specific implementation, the MAC layer of the terminal device may determine whether the scheduling request and the information included in the first uplink channel can be combined (that is, determine whether the first uplink channel exists in the first time domain range), the MAC layer indicates an uplink channel on which the PHY layer of the terminal device transmits the scheduling request, and then the PHY layer of the terminal device transmits the scheduling request. Alternatively, the MAC layer of the terminal device may indicate only the time domain position of the PUCCH including the scheduling request, and then the PHY layer of the terminal device determines whether the scheduling request and the information included in the first uplink channel can be combined, and transmits the scheduling request.

Currently, in some embodiments, when the PUCCH including the scheduling request partially or completely overlaps (overlap) with another uplink channel in time domain, a transmission manner of the scheduling request and information on the another uplink channel may be shown in the following Table 1. In Table 1, for example, the scheduling request is an SR.

**Table 1**

| Information included in the uplink channel and a format | | SR | |
|---|---|---|---|
| | | PF 0 | PF 1 |
| HARQ feedback | PF 0 | **Transmission on a PUCCH resource of the HARQ feedback, where the SR is carried by using an additional cyclic shift (cyclic shift, CS). For example, when HARQ feedback information of 1 bit is carried, if there is no SR, mcs=0/6, or if there is an SR, mcs=3/9. When HARQ feedback information of 2 bits is carried, if there is no SR, $m_{CS}$=0/3/6/9, or if there is an SR, mcs=1/4/7/10.** | Same as the PF 0 |
| | PF 1 | Discard the SR | Channel selection, where if there is an SR, the HARQ feedback is transmitted through a PUCCH of the SR, and otherwise, the |

(continued)

| Information included in the uplink channel and a format | SR | | |
|---|---|---|---|
| | PF 0 | | PF 1 |
| | | | HARQ feedback is transmitted through a PUCCH of the HARQ feedback. |
| | PF 2/3/4 | **An SR indication of log(K+1) bits is added to a bit of the HARQ feedback (for example, if the HARQ feedback has N bits, a total quantity of information bits carried on the PUCCH is N+log(K+1) bits), and all the information bits are jointly encoded, where K represents that PUCCH resources of K SRs exist in a current slot. If the log(K+1) bits are all 0s, it indicates that no SR is transmitted (namely, a negative SR). Otherwise, the log(K+1) bits indicate that one of the K SRs is transmitted (positive). That is, when the SR occasion (occasion) and the HARQ feedback overlap (overlap), there are always these log(K+1) bits.** | **Same as the PF 0** |
| CSI report on a PUCCH | PF 2/3/4 | **An SR indication of log(K+1) bits is added to a bit of the CSI report for joint encoding. For a specific meaning, refer to the foregoing manner of multiplexing with the HARQ feedback.** | **Same as the PF 0** |
| PUSCH | No uplink data is | Discard the PUSCH | Discard the PUSCH |
| Information included in the uplink channel and a format | SR | | |
| | PF 0 | | PF 1 |
| | carried | | |

In the foregoing Table 1, $m_{cs}$ is a value of a cyclic shift value. For example, when $m_{cs}$=6, it indicates that the used cyclic shift value is 6.

In some examples, when the scheduling request may be combined into the PUCCH including the HARQ feedback for transmission, and the format of the PUCCH including HARQ feedback is the format 0/2/3/4, or when the scheduling request may be combined into the PUCCH including the CSI report for transmission, and the format of the PUCCH including the CSI report is the format 2/3/4, the terminal device may use the corresponding method in Table 1 (namely, the method in bold in Table 1) to transmit the scheduling request. Specifically, the following scenarios may be included.

Scenario b1: When the format of the PUCCH including the scheduling request is the format 0 or the format 1, the first uplink channel is the PUCCH including the HARQ feedback, and the format of the PUCCH including the HARQ feedback is the format 0, the terminal device may concatenate the scheduling request and the HARQ feedback to obtain the first information. Then, the terminal device maps the first information to a first cyclic shift value, and transmits the first information to the network device based on the first cyclic shift value. For example, when the HARQ feedback is 1 bit and the value of the bit of the HARQ feedback is ACK, if a scheduling request is transmitted (that is, currently, the terminal device requests uplink data scheduling from the network device), $m_{cs}$=3. In this case, the terminal device generates the PUCCH by using a sequence whose first cyclic shift value is 3, and then transmits the PUCCH to the network device.

Scenario b2: When the format of the PUCCH including the scheduling request is the format 0 or the format 1, the first uplink channel is the PUCCH including the HARQ feedback, and the format of the PUCCH including the HARQ feedback is the format 2, the format 3, or the format 4, the terminal device concatenates the scheduling request and the HARQ feedback to obtain the first information. Then, the terminal device transmits the first information to the network device through the first uplink channel. When concatenating the scheduling request and the HARQ feedback, the terminal device concatenates a bit (for example, log(K+1) bits) corresponding to the scheduling request and the bit corresponding to the HARQ feedback.

Scenario b3: When the format of the PUCCH including the scheduling request is the format 0 or the format 1, the first uplink channel is the PUCCH including the CSI report, and the format of the PUCCH including the CSI report is the format 2, the format 3, or the format 4, the terminal device concatenates the scheduling request and the CSI report to obtain first information. Then, the terminal device transmits the first information to the network device through the first uplink channel. When concatenating the scheduling request and the CSI report, the terminal device concatenates a bit (for example, log(K+1) bits) corresponding to the scheduling request and the bit corresponding to the CSI report.

In some other examples, when the first uplink channel is the PUCCH including the HARQ feedback, and the format of the PUCCH is the format 1, or the first uplink channel is the PUSCH (for example, the PUSCH including no uplink data), the terminal device no longer uses the corresponding method in Table 1 (namely, the method not in bold in Table 1). Specifically, the terminal device may use the methods in the following scenarios.

Scenario c1: When the format of the PUCCH including the scheduling request is the format 0, the first uplink channel is the PUCCH including the HARQ feedback, and the format of the PUCCH including the HARQ feedback is the format 1, the terminal device may use the following methods.

Method 1: The terminal device does not combine the scheduling request and the HARQ feedback, that is, the scheduling request cannot be combined for transmission.

Method 2: (1) If the HARQ feedback includes information of only 1 bit (bit), the terminal device concatenates the scheduling request and the HARQ feedback to obtain the first information, maps the first information to a second cyclic shift value, and transmits the first information to the network device based on the second cyclic shift value. That is, the terminal device carries the scheduling request by using a cyclic shift of the PUCCH, that is, if there is no scheduling request (that is, currently, the terminal device does not request uplink data scheduling from the network device), mcs=0/6 (namely, the second cyclic shift value), or if there is a scheduling request (that is, currently, the terminal device requests uplink data scheduling from the network device), mcs=3/9 (namely, the second cyclic shift value).

(2) If the HARQ feedback includes information of 2 bits, information of 3 bits composed of the scheduling request and the HARQ feedback may generate an 8 phase shift keying (8 phase shift keying, 8PSK) modulation symbol, which is multiplied by a sequence (sequence), for example, may meet the following Formula 1:

$$ y(n) =_d(0) r_{u, v}^{(\alpha, \delta)}(n) \hspace{4cm} \text{Formula 1} $$

Herein, y(n) is the first information, $r_{u, v}^{(\alpha, \delta)}(n)$ is the sequence, u, v, $\alpha$, and $\delta$ are sequence generation parameters, $n=0, 1, \cdots, N_{SC}^{RB} - 1$, $N_{SC}^{RB}$ is a quantity of subcarriers included in one resource block (resource block, RB), a value of the $N_{SC}^{RB}$ may be 12 or the like, and d(0) is the 8PSK modulation symbol.

Optionally, when the HARQ feedback includes information of 2 bits, the terminal device may not combine the scheduling request and the HARQ feedback.

Scenario c2: When the format of the PUCCH including the scheduling request is the format 1, the first uplink channel is the PUCCH including the HARQ feedback, and the format of the PUCCH including the HARQ feedback is the format 1, when determining that a resource of the PUCCH of the format 1 used to transmit the scheduling request exists in the time domain position of the first uplink channel, the terminal device transmits the first information to the network device in a channel selection manner.

Optionally, when determining that a resource of the PUCCH of the format 1 used to transmit the scheduling request does not exist in the time domain position of the first uplink channel, the terminal device may not combine the scheduling request with the HARQ feedback.

Scenario c3: When the format of the PUCCH including the scheduling request is the format 0 or the format 1, and the first uplink channel is the PUSCH (for example, the PUSCH including no uplink data), that the terminal device combines the scheduling request with information included in the first uplink channel, to obtain first information may include the following two methods.

Method 1: The terminal device concatenates the scheduling request and the information included in the PUSCH, to obtain the first information.

In Method 1, the scheduling request may be multiplexed (multiplexing) onto the PUSCH, that is, the information bit of the scheduling request and an information bit of the uplink data are concatenated, and then are modulated and mapped to a physical resource of the PUSCH together, to obtain the first information.

Method 2: The terminal device punctures (puncture) the PUSCH, and maps the scheduling request to a punctured position of the PUSCH, to obtain the first information. The first information is the scheduling request that is mapped to the punctured position of the PUSCH and information that is mapped to an unpunctured position of the PUSCH.

In Method 2, the terminal device separately modulates the scheduling request, and after puncturing the PUSCH, the terminal device replaces modulation symbols (modulated symbols) on some resource elements (resource elements, REs) occupied by the punctured PUSCH with modulation symbols obtained after the scheduling request is modulated, to obtain the first information.

For example, the punctured position of the PUSCH may be predefined. For example, in time domain, the terminal device may start puncturing from a first symbol occupied by the PUSCH, or the terminal device may start puncturing from a first symbol other than a DMRS in the PUSCH. In frequency domain, the terminal device may start puncturing from a start RE occupied by the PUSCH, and two REs at which the PUSCH is punctured may be spaced by h REs, where h may be predefined. Certainly, there may be another possibility of the punctured position of the PUSCH. It is ensured that information at the punctured position has little impact on data transmission. This is not limited in this application.

Optionally, when the format of the PUCCH including the scheduling request is the format 0 or the format 1, and the first uplink channel is the PUSCH (for example, the PUSCH including no uplink data), the terminal device may not combine the scheduling request with information on the PUSCH.

Currently, when the scheduling request and the information on the first uplink channel are separately transmitted, the terminal device needs to transmit two signals. Although transmission power consumption of the terminal device is high, energy allocated to each bit of the two signals is also high. This can resist strong noise, and a signal coverage area is large. However, when the scheduling request and the information on the first uplink channel are combined for transmission by using the method in this application, energy allocated to each bit is low in both the scheduling request and the information on the first uplink channel. In this case, a signal coverage area may be limited, and signal transmission reliability may be reduced. To resolve a signal transmission reliability problem, in this application, reliability of signal transmission may be ensured by using the following methods.

Method d1: After the terminal device receives a reference signal from the network device, the terminal device performs step 202 and step 203 when a reference signal received power (reference signal received power, RSRP) transmitted to the network device is greater than an RSRP threshold. The RSRP is determined by the terminal device based on the reference signal.

The terminal device performs the following operations an RSRP value based on the power of the reference signal (for example, a synchronization signal block and a physical broadcast channel block ((synchronization signal block, SSB) and (physical broadcast channel, PBCH) block), CSI-RS, or the like) received from the network device. When the RSRP value is larger, it indicates that the terminal device is closer to the network device. The RSRP threshold is equivalent to an equivalent distance threshold from the network device to the terminal device. When the RSRP corresponding to the reference signal received by the terminal device is greater than the RSRP threshold, it indicates that the terminal device is close enough to the network device. In this case, even if the terminal device combines the scheduling request and the information on the first uplink channel for transmission, it can be ensured that the signal can be correctly transmitted. When the RSRP reported by the terminal device to the network device is greater than the RSRP threshold, it may be considered that coverage of the terminal device is not limited. In this case, the scheduling request may be transmitted in the manner in step 202 and step 203.

For example, when the RSRP does not meet the condition in Method d1, the terminal device may transmit the scheduling request by using a currently commonly used method, for example, a manner of separately transmitting the scheduling request.

It should be noted that the manner in step 202 and step 203 is used to transmit the scheduling request only when both the terminal device and the network device determine that the RSRP is greater than the RSRP threshold. Therefore, the RSRP transmitted by the terminal device to the network device is compared with the RSRP threshold, so that both the terminal device and the network device can determine whether the condition is met.

Method d2: When the terminal device transmits the first information to the network device, the terminal device may transmit the first information to the network device by using a first transmit power.

The first transmit power may be determined in the following two manners.

Manner 1: The first transmit power may be obtained by adding X decibels (dB) to an original transmit power of the first uplink channel. A value of X may be predefined in a standard, or may be preconfigured by the network device for the terminal device, or may be indicated by the network device by using signaling (for example, DCI). This is not limited in this application.

Manner 2: The first transmit power may be determined based on an original transmit power of the first uplink channel and an original transmit power of the PUCCH including the scheduling request. For example, the first transmit power may be obtained by adding the original transmit power of the first uplink channel and the original transmit power of the PUCCH, or the first transmit power may be obtained by multiplying a sum of the original transmit power of the first uplink channel and the original transmit power of the PUCCH by a coefficient. For example, if the original transmit power of the PUCCH is 16 decibels with reference to one milliwatt (dBm), and the original transmit power of the first uplink channel is 16 dBm, the first transmit power may be a sum of the original transmit power of the first uplink channel and the original transmit power of the PUCCH, namely, 32 dBm, or may be obtained by multiplying a sum of the original transmit power of the first uplink channel and the original transmit power of the PUCCH by a coefficient, namely, 18 dBm, or the like. Certainly, the first transmit power may be obtained by using another method. This is not limited in this application.

It should be understood that the foregoing two manners are used to improve the transmit power. In some embodiments, the transmit power of the first uplink channel may be determined based on a path loss value estimated by the terminal device, a transmission parameter configured by the network device, and a transmit power control (transmit power control, TPC) command indicated by the network device in the DCI. To improve transmission reliability of combined transmission of the scheduling request and the information on the first uplink channel, a manner in the foregoing Method d2 may be used to increase the transmit power of the first uplink channel, so as to increase average energy allocated to each bit.

In an optional implementation, when the terminal device combines, for transmission, the scheduling request and the information included in the first uplink channel to the network device, and when the network device receives the scheduling request and the information included in the first uplink channel that are combined by the terminal device for transmission, the network device and the terminal device need to jointly enable or disable the function (that is, a function of combining, for transmission, the scheduling request and the information included in the first uplink channel) through negotiation. For example, enabling of the function may be configured in the following four manners.

Manner e1: The terminal device receives a first message from the network device, where the first message is used to configure or enable a function of the terminal device for combining, for transmission, the scheduling request and the information included in the first uplink channel.

The first message is also configuration information transmitted by the network device to the terminal device. For example, the first message may be transmitted by using radio resource control (radio resource control, RRC) signaling or a medium access control (medium access control, MAC) control element (control element, CE) (MAC CE).

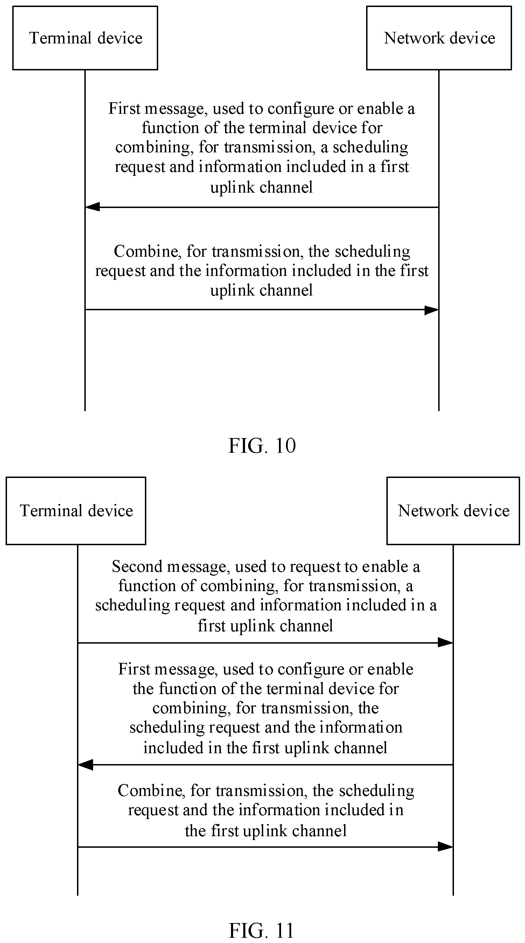

According to the foregoing method, when the first uplink channel exists in the first time domain range, the terminal device may combine, for transmission, the scheduling request and the information included in the first uplink channel, and the network device may receive the scheduling request and the information included in the first uplink channel that are combined by the terminal device for transmission. For example, a specific procedure may be shown in FIG. 10.

Manner e2: The terminal device transmits a second message to the network device, where the second message is used to request to enable a function of combining, for transmission, the scheduling request and the information included in the first uplink channel. Then, the terminal device receives the first message from the network device, where the first message is used to configure or enable a function of the terminal device for combining, for transmission, the scheduling request and the information included in the first uplink channel. Then, when the first uplink channel exists in the first time domain range, the terminal device may combine, for transmission, the scheduling request and the information included in the first uplink channel, and the network device may receive the scheduling request and the information included in the first uplink channel that are combined by the terminal device for transmission. For example, a specific procedure may be shown in FIG. 11.

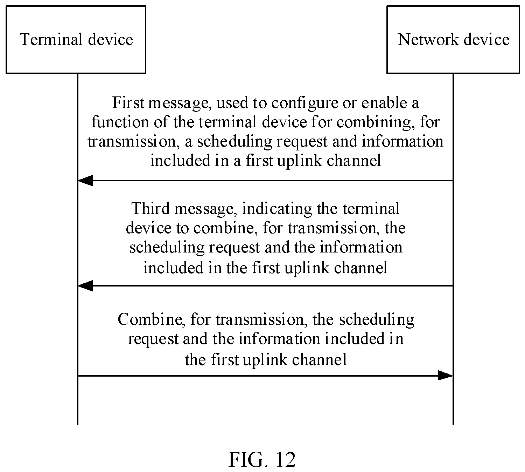

Manner e3: The terminal device receives a first message from the network device, where the first message is used to configure or enable a function of the terminal device for combining, for transmission, the scheduling request and the information included in the first uplink channel. Then, the terminal device receives a third message from the network device, where the third message indicates the terminal device to combine, for transmission, the scheduling request and the information included in the first uplink channel. Then, when the first uplink channel exists in the first time domain range, the terminal device may combine, for transmission, the scheduling request and the information included in the first uplink channel, and the network device may receive the scheduling request and the information included in the first uplink channel that are combined by the terminal device for transmission. For example, a specific procedure may be shown in FIG. 12.

In Manner e3, after transmitting configuration information (namely, the first message) to the terminal device, the network device further needs to transmit dynamic indication information, namely, the third message (for example, the DCI), to the terminal device, to indicate whether the terminal device can combine the scheduling request and the information included in the first uplink channel for transmission. For example, the third message may be added to DCI of the PUSCH/PUCCH scheduled by the network device, to indicate whether the scheduling request and information included in the first uplink channel can be combined for transmission.

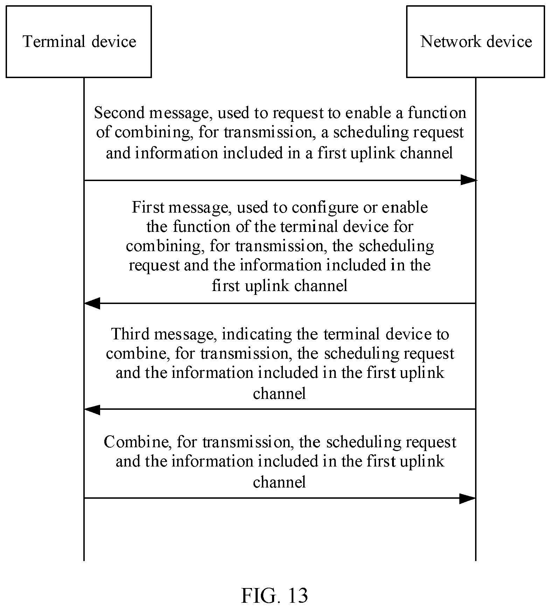

Manner e4: The terminal device transmits a second message to the network device, where the second message is used to request to enable a function of combining, for transmission, the scheduling request and the information included in the first uplink channel. Then, the terminal device receives the first message from the network device, where the first message is used to configure or enable a function of the terminal device for combining, for transmission, the scheduling request and the information included in the first uplink channel. Then, the terminal device receives a third message from the network device, where the third message indicates the terminal device to combine, for transmission, the scheduling request and the information included in the first uplink channel. Finally, when the first uplink channel exists in the first time domain range, the terminal device may combine, for transmission, the scheduling request and the information included in the first uplink channel, and the network device may receive the scheduling request and the information included in the first uplink channel that are combined by the terminal device for transmission. For example, a specific procedure may be shown in FIG. 13.

That is, Manner e4 is a combination of the foregoing three manners. For specific message descriptions, refer to related descriptions in the foregoing manners.

According to the scheduling request transmission method provided in this application, the scheduling request and the information included in the first uplink channel are combined for transmission, so that a quantity of uplink transmission times can be reduced, thereby reducing power consumption of the terminal device.

With reference to an actual scenario, the following describes how to reduce the quantity of uplink transmission times by using the method in the foregoing embodiments, thereby reducing power consumption of the terminal device. Specifically, when the terminal device is a mobile phone, in a scenario in which a user of the mobile phone transmits and receives WeChat messages by using the mobile phone, when receiving a WeChat message by using the mobile phone, the user receives a downlink data packet (included in the PDSCH), and transmits a HARQ feedback (included in the PUCCH) to the network device. When the user transmits a WeChat message by using the mobile phone, a scheduling request is first transmitted to the network device. If the current method is used, if a time domain position, determined by the mobile phone based on configuration/indication of the network device, for transmitting the HARQ feedback does not overlap a time domain position for transmitting the scheduling request, the mobile phone separately transmits the HARQ feedback and the scheduling request at the two time domain positions, that is, transmits two uplink signals. If the solutions in this application are used, when a condition is met, the mobile phone may combine information of the scheduling request and the HARQ feedback, and transmit the combined information through the PUCCH. In this case, the mobile phone transmits only one uplink signal. Thus, effect of energy saving of the mobile phone is achieved.

Based on the foregoing embodiments, the scheduling request transmission method is described in detail by using some specific examples. In the following example, an example in which the terminal device is UE, the network device is a base station, and the scheduling request is an SR is used for description.

In the following example, this solution is used to reduce a quantity of uplink transmission times of the UE, thereby reducing uplink transmission power consumption of the UE.

Specifically, in the following example, to reduce the quantity of uplink transmission times of the UE, the UE may predict that there is other uplink transmission near a PUCCH of the SR. (namely, the first uplink channel involved in the foregoing embodiments) (which may also be referred to as an uplink resource, an uplink signal, or the like), and the SR is combined into another uplink transmission for transmission, to reduce a quantity of uplink signal transmission times (namely, a quantity of uplink transmission times), and reduce power consumption of uplink transmission. Further, this solution may be described by using the following three aspects: A first aspect is a case in which the UE combines the SR for transmission, that is, how to define "near the PUCCH"; a second aspect is the SR is combined into another uplink transmission for transmission; and a third aspect is how to avoid impact on transmission performance.

According to the first aspect, the case in which the LTE combines the SR for transmission, that is, how to define "near the PUCCH" is as follows.

The other uplink transmission may include any one of the following: a PUCCH carrying a HARQ feedback (for example, a HARQ-ACK, where the following HARQ feedback is described by using the HARQ-ACK as an example), a PUCCH carrying a CSI report (report), and a PUSCH carrying no UL-SCH (namely, a PUSCH including no uplink data).

Further, the SR may be combined into the other uplink transmission for transmission when an SR resource also exists in a slot in which the other uplink transmission is located.

Near the PUCCH of the SR may be defined as: within a specific time range (namely, the first time domain range involved in the foregoing) before and after the PUCCH, which may be represented by using two time windows.

According to the second aspect, how to combine the SR into another uplink transmission for transmission is as follows.

Method 1: The method in some current embodiments may be used, and is applicable to some scenarios, for example, a scenario in which information of the PF 0/2/3/4 of the HARQ-ACK is combined with the SR for transmission, or a scenario in which CSI in the PUCCH is combined with the SR for transmission.

Method 2: Combined transmission is performed by using the method provided in this application, and may be applicable to a scenario other than the scenarios in Method 1, for example, a scenario in which information of the PF 1 of the HARQ-ACK is combined with the SR for transmission, or a scenario in which CSI included in the PUSCH that does not carry the uplink data is combined with the SR for transmission.

According to the third aspect, how to avoid impact on transmission performance is as follows.

Possible impact: When the SR are combined into the other uplink transmission, energy per bit (energy per bit) decreases, and coverage performance is affected.

Solution 1: An RSRP threshold is introduced. When an RSRP reported by the LTE to the base station is greater than the RSRP threshold, it is considered that coverage of the UE is not limited. In this case, the combined transmission manner in this application can be used. Otherwise, a currently commonly used manner is used.

Solution 2: Power control for uplink transmission is enhanced.

For example, when the SR is combined into the other uplink transmission for transmission, a transmit power of the other uplink transmission is added by X dB, where a value of X may be predefined, configured by the base station, or indicated by DCI.

For another example, when the SR is combined into the other uplink transmission for transmission, a final transmit power of the other uplink transmission may be determined by using an original transmit power of the PUCCH of the SR and an original transmit power of the other uplink transmission, for example, determined by adding the original transmit power of the PUCCH of the SR and the original transmit power of the other uplink transmission, or determined by multiplying a sum of the original transmit power of the PUCCH of the SR and the original transmit power of the other uplink transmission by a coefficient.

In a first specific example, uplink transmission (namely, the first uplink channel involved in the foregoing embodiments) may include any one of the following: a PUCCH carrying a HARQ-ACK, a PUCCH carrying a CSI report (report), and a PUSCH carrying no UL-SCH. That is, in this example, the SR can only be combined into the foregoing three types of uplink transmission for transmission together.

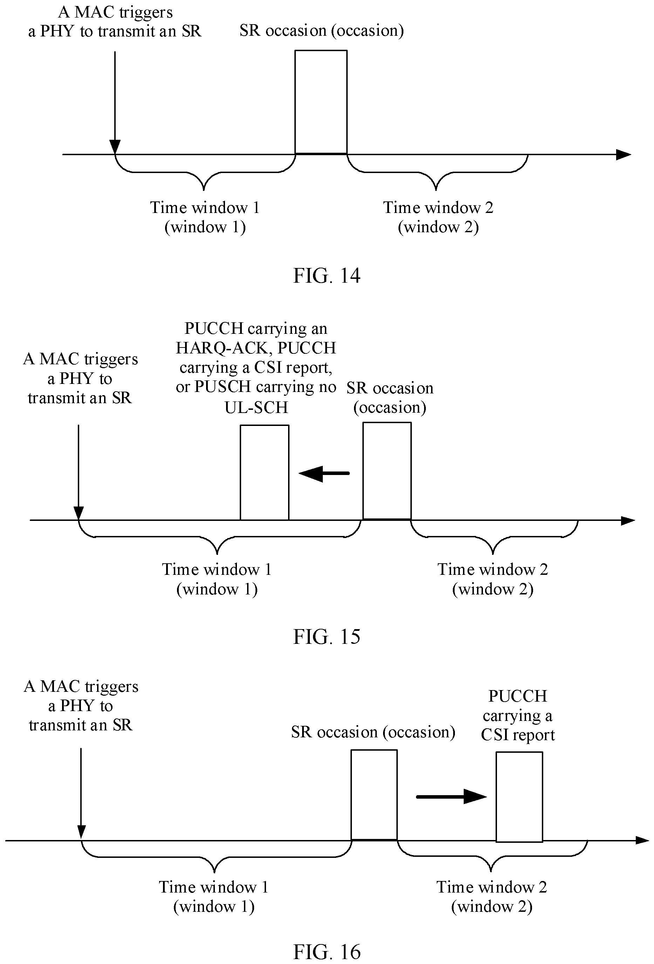

Near the PUCCH of the SR may be defined within a range (namely, the first time domain range involved in the foregoing embodiments) of a time window 1 (window 1) (namely, the first time window involved in the foregoing embodiments) and/or a time window 2 (window 2) (namely, the second time window involved in the foregoing embodiments) shown in FIG. 14.

The time window 1 may be defined as: a start point is "triggering by a PHY layer by receiving the SR of a MAC layer" (namely, a start moment is a moment triggering by the PHY layer of the LTE by receiving the SR of the MAC layer of the LTE), and an end point is an "SR occasion" (occasion) (where the SR occasion is a PUCCH resource of the SR) (that is, an end moment is a time domain position of a PUCCH that includes the SR), or an end point is an "SR occasion", and a length is a length 1 (length 1) (namely, the first time domain length involved in the foregoing embodiments), where the length 1 may be predefined or configured by the base station.

A start point of the time window 2 is an "SR occasion", and a length of the time window 2 is a length 2 (length 2). The length 2 may be predefined or configured by the base station.

That is, as long as there is other uplink transmission within the range of the time window 1 and/or the time window 2, the SR information may be combined into the other uplink transmission for transmission together.

Optionally, if there are a plurality of uplink transmissions in the time window 1 and/or the time window 2, the SR may be combined by selecting uplink transmission with an earliest occurrence time point (namely, an earliest time domain position) or uplink transmission closest to the SR occasion (that is, with a minimum interval between the time domain positions of the plurality of uplink channels involved in the foregoing embodiments and the time domain position of the PUCCH including the scheduling request). In this way, a unique position for transmitting the SR can be determined, to avoid carrying a redundant bit in each other uplink transmission.

By using the first specific example, a quantity of transmission times by the UE can be reduced, thereby reducing power consumption of the UE.

In a second specific example, determining that there is other uplink transmission near the PUCCH of the SR is described in detail. Specifically, there are the following three possible cases.

(1) If the uplink transmission is the PUCCH carrying the HARQ-ACK, or the PUCCH carrying the CSI report (report), or the PUSCH carrying no LTL-SCH, and the uplink transmission falls within the time window 1, the SR may be combined into the uplink transmission for transmission. In this example, the foregoing type of uplink transmission may carry the SR information in a specific manner, and the foregoing type of uplink transmission is performed before the PUCCH of the SR and after the MAC layer of the LTE triggers the PHY layer to transmit the SR (namely, a triggering moment at which the PHY layer of the terminal device receives the scheduling request of the MAC layer of the terminal device in the foregoing embodiments) (namely, within the time window 1), as shown in FIG. 15. Therefore, the UE may determine that the uplink transmission exists before the PUCCH of the SR, and may perform combined transmission.

(2) If the uplink transmission is the PUCCH carrying the CSI report, and the uplink transmission falls within the time window 2, the SR may be combined into the uplink transmission for transmission. In this example, because the PUCCH carrying the CSI report is semi-statically configured, the UE may predetermine that, within a specific range (namely, the second time domain length involved in the foregoing embodiments) after the PUCCH of the SR, the PUCCH carrying the CSI report may be used, so that the SR can be successfully combined into the PUCCH carrying the CSI report for transmission, for example, as shown in FIG. 16. If the UE cannot determine whether there is definitely available uplink transmission within the time window 2, to avoid a case in which the SR cannot be transmit because of no available resource, the UE can transmit the SR only by using the PUCCH of the SR. Therefore, energy saving of the LTE cannot be achieved.

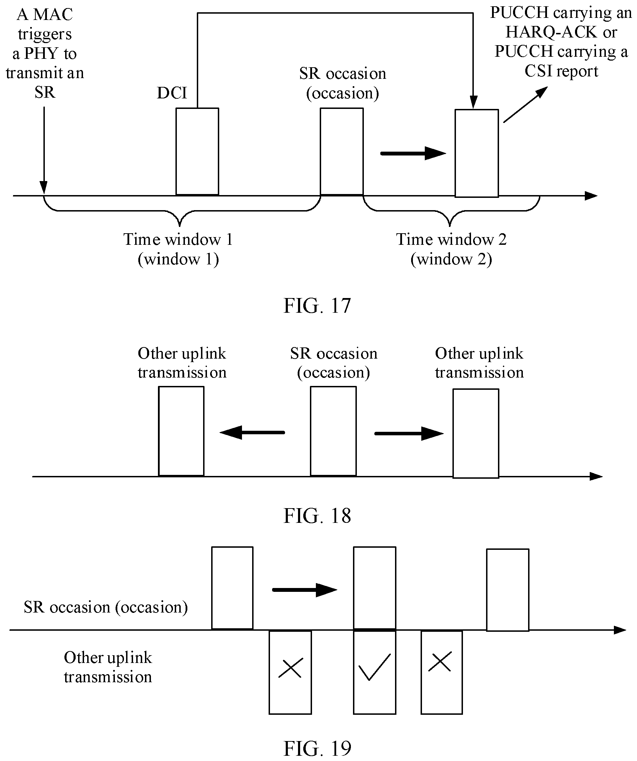

(3) If the uplink transmission is the PUSCH carrying no UL-SCH or the PUCCH carrying the HARQ-ACK, the uplink transmission falls within the time window 2, and DCI for scheduling the PUSCH or the PUCCH is located before the PUCCH of the SR, the SR may be combined into the uplink transmission for transmission, for example, as shown in FIG. 17. In this example, although the uplink transmission is not semi-statically configured, but is dynamically scheduled, the DCI for scheduling the uplink transmission is located before the PUCCH of the SR. That is, before the PUCCH of the SR, the LTE can determine that available uplink transmission may exist in the subsequent time window 2. Therefore, the UE may combine the SR into the uplink transmission. If there is no available uplink transmission, the UE transmits the SR through the PUCCH of the SR.

In addition, when one of the foregoing three cases is met, whether combined transmission can be performed may be further limited. For example, combination may be performed as long as there is uplink transmission, as shown in FIG. 18.

For another example, a slot in which other uplink transmission is located can be combined for transmission when there is an SR occasion, as shown in FIG. 19.

In any scenario, the MAC layer of the UE may determine whether combination can be performed, and indicate an SR resource on which the PHY layer of the UE transmits the SR, and the PHY layer of the UE multiplexes and transmits the SR in a currently commonly used manner. Alternatively, the MAC layer of the UE indicates only one SR occasion, and the PHY layer of the UE determines whether combination can be performed, and transmits the SR.

In the second specific example, a method for determining that there is other uplink transmission near the PUCCH of the SR may be specified.

In a third specific example, how the SR is combined into other uplink transmission for transmission is specifically described.

For example, in some current embodiments shown in Table 1 in the embodiment shown in FIG. 2, both a solution when the SR overlaps the other uplink transmission and a solution corresponding to the combination manner shown in bold in Table 1 may be used in this example. That is, when it is determined, according to the manner in the first specific example or the second specific example, that the SR may be combined into the PUCCH format (PF) 0/2/3/4 carrying the HARQ-ACK, or when the SR may be combined into the PF 2/3/4 carrying the CSI report, the method in the current embodiment may be used. However, the combination method corresponding to the part not in bold in Table 1 may need to be enhanced. Specifically, the following scenarios may be included.

Scenario 1: If the PUCCH resource of the SR is in the format (format) 0, and the SR needs to be combined, for transmission, into a PF 1 carrying a HARQ-ACK, there are several possible solutions as follows.

Method 1: The combination cannot be combined for transmission, that is, in this scenario, the SR cannot be combined for transmission.

Method 2: If the HARQ-ACK has only 1 bit (bit), SR information is carried by using a cyclic shift of the PUCCH (the UE concatenates the SR and the HARQ-ACK, maps the concatenated information to the second cyclic shift value, and transmits the concatenated information to the network device based on the second cyclic shift value), that is, if there is no SR, $m_{CS}=0/6$, or if there is an SR, $m_{CS}=3/9$.

If the HARQ-ACK has 2 bits, the following two methods may be included.

Method 2-1: The SR cannot be combined into the PUCCH for transmission.

Method 2-2: Information of 3 bits composed of the SR and the HARQ-ACK may generate an 8PSK symbol, and then the 8PSK symbol is multiplied by a sequence (sequence). For example, refer to Formula 1 in the foregoing embodiment. Details are not described herein again. In the current embodiment, $d(0)$ is a complex number symbol, and is generated by using a maximum of 2 bits of information. In Method 2-2, $d(0)$ is an 8PSK symbol.

Scenario 2: If the PUCCH resource of the SR is in the format 1, and the SR needs to be combined, for transmission, into a PF 1 carrying a HARQ-ACK, the following solution may be included.

If a resource of the PUCCH of the format (format) 1 used for transmission of the SR exists in a slot in which the PUCCH carrying the HARQ-ACK is located, the UE uses a channel selection manner (the same as the channel selection manner in the current embodiment). Otherwise, the SR and the PUCCH carrying the HARQ-ACK cannot be combined.

Scenario 3: If the SR needs to be combined, for transmission, into the PUSCH carrying no UL-SCH, the following solution may be included.

Method 1: The SR may be multiplexed (multiplexing) onto the PUSCH, that is, the SR information bit and the uplink data bit are concatenated, and then modulated and mapped to a physical resource of the PUSCH together.

Method 2: The SR may puncture (puncture) the PUSCH, that is, the UE separately modulates the SR, and after the PUSCH is generated, modulated symbols of some REs occupied by the PUSCH are replaced with symbols of a modulated SR.

Method 3: In this scenario, the SR cannot be combined for transmission.

By using the third specific implementation, it may be clear how the UE combines the SR for transmission.

In a fourth specific example, the foregoing specific example is further supplemented.

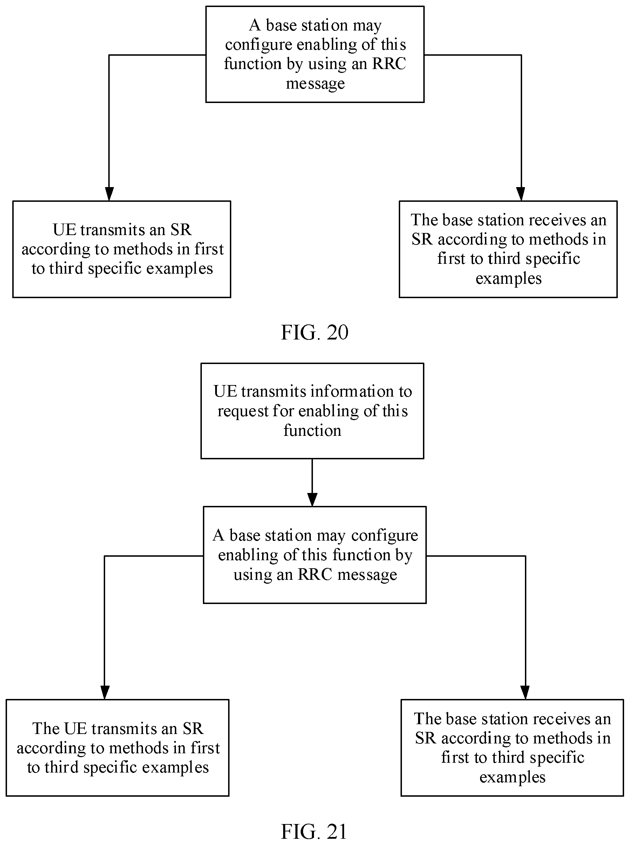

Specifically, the base station may transmit configuration information (namely, the first message in the foregoing embodiment) to the UE (for example, by using RRC signaling (message) or a MAC CE), where the configuration information is used to enable the function (namely, a function of combining the SR and the uplink transmission for transmission, namely, the function of combining, for transmission, the scheduling request and the information included in the first uplink channel in the foregoing embodiment). After the UE is configured with the function, when a relative position of the PUCCH or the PUSCH meets a condition, both the base station and the UE can determine that the two (namely, the SR and the information included in the PUCCH or the PUSCH) can be combined for transmission. An example procedure may be shown in FIG. 20.

In addition, the UE may transmit auxiliary information (namely, the second message in the foregoing embodiment), to request or trigger enabling (that is, starting) or disabling of the function. An example procedure may be shown in FIG. 21.

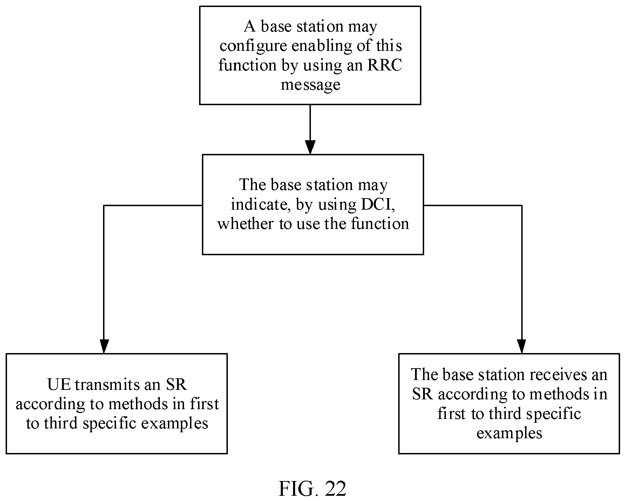

In another case, after transmitting the configuration information to the UE, the base station further needs to transmit dynamic indication information (for example, DCI) (namely, the third message in the foregoing embodiment) to the LTE, to indicate whether the LTE can perform combined transmission (that is, whether the function is enabled). For example, indication information is added to the DCI for scheduling the PUSCH or the PUCCH, to indicate whether the SR can be combined into the current PUSCH or the PUCCH for transmission. An example procedure may be shown in FIG. 22.

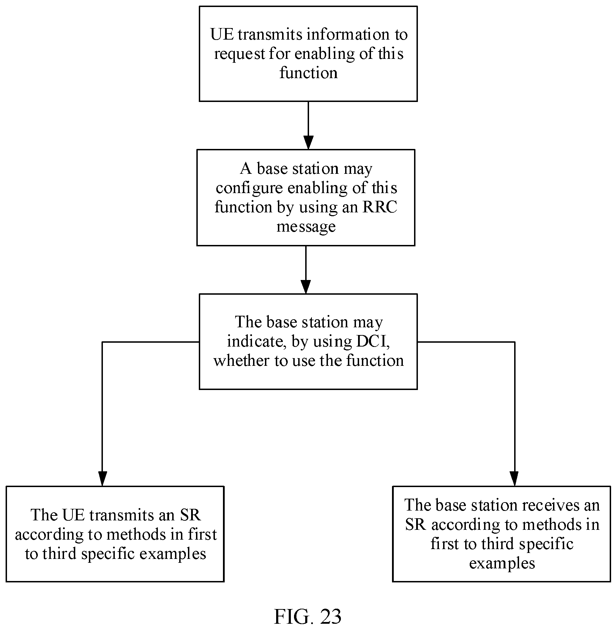

Further, in the foregoing case, enabling or disabling of the function may be requested or triggered with reference to a request of the LTE. An example procedure may be shown in FIG. 23.

In a fifth specific example, this example is used to avoid impact on transmission performance. When the PUCCH of the SR is transmitted separately from other uplink transmission, the UE needs to transmit two signals. Although transmit power consumption of the UE is high, energy allocated to each bit of the two signals is also high. This can resist strong noise, and a signal coverage area is large. When the SR and the other uplink transmission are combined for transmission, energy allocated to each bit is low in both the SR and information in the other uplink transmission. In this case, a signal coverage area may be limited, and signal transmission reliability may be reduced. To resolve a problem of signal transmission reliability, this example proposes several enhancement methods.

Method 1: A reference signal received power (reference signal received power, RSRP) threshold is introduced. When an RSRP reported by the UE to the base station is greater than the RSRP threshold, it may be considered that coverage of the UE is not limited. In this case, the combined transmission manner in this application can be used. Otherwise, a currently commonly used manner is used. The principle is as follows: The UE calculates an RSRP value based on the reference signal received power transmitted by the base station. When the RSRP value is larger, it indicates that the UE is closer to the base station. The RSRP threshold is equivalent to an equivalent distance threshold from the base station to the UE. When the RSRP received by the UE is greater than the threshold, it indicates that the UE is close enough to the base station. In this case, even if the UE combines the SR with other uplink transmission for transmission, it can be ensured that a signal can be correctly transmitted. It should be noted that, in this method, the condition is "the RSRP reported by the LTE to the base station". This is because both the LTE and the base station need to know whether the SR and the other uplink transmission are combined, so that correct transmission can be performed. Therefore, both the UE and the base station need to know whether the RSRP condition is met.

Method 2: A power control manner is enhanced. In some current embodiments, a transmit power of an uplink signal may be determined based on one or more of a path loss value estimated by the LTE, a transmission parameter configured by the base station, or a TPC (transmit power control, transmit power control) command indicated by the base station in the DCI. If no enhancement is performed, the LTE determines the transmit power of the uplink signal according to the method in the current embodiment. To improve transmission reliability of a combined signal, when the SR and the uplink transmission are combined for transmission, a transmit power of the combined signal may be increased, to increase the average energy allocated to each bit. Specifically, the following several possible methods may be included.

Example 1: When the SR is combined into the other uplink transmission for transmission, a transmit power of the other uplink transmission is added by X dB, where a value of X may be predefined, configured by the base station, or indicated by the base station by using the DCI.

Example 2: When the SR is combined into other uplink transmission for transmission, a final transmit power of the other uplink transmission may be determined by using an original PUCCH transmit power of the SR (namely, the original transmit power of the PUCCH) and an original transmit power of the other uplink transmission (namely, the original transmit power of the first channel), for example, determined by adding the two powers, or determined by multiplying a sum of the two powers by a coefficient. For example, if the original transmit power of the PUCCH of the SR is 16 dBm, when the SR is combined into the PUSCH for transmission, the original transmit power of the PUSCH is 16 dBm. After the SR is combined into the PUSCH, a transmit power of the PUSCH may be a sum of the original transmit power of the PUCCH of the SR and the original transmit power of the PUSCH, namely, 32 dBm, or may be determined by multiplying a sum of the original transmit power of the PUCCH of the SR and the original transmit power of the PUSCH by a coefficient, namely, 18 dBm or the like.

In the fifth specific example, implementability of combined transmission of the SR and the other uplink transmission is further considered, and impact of combined transmission on transmission performance is reduced.

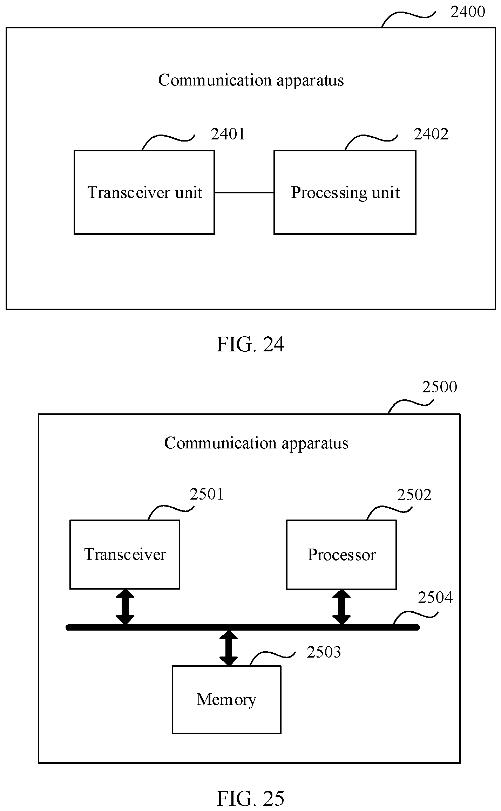

Based on the foregoing embodiments, an embodiment of this application further provides a communication apparatus. Refer to FIG. 24. The apparatus 2400 may include a transceiver unit 2401 and a processing unit 2402. The transceiver unit 2401 is used by the communication apparatus 2400 to transmit information (a message or data), that is, receive information (a message or data) or transmit information (a message or data). The processing unit 2402 is configured to control and manage an action of the communication apparatus 2400. The processing unit 2402 may further control a step performed by the transceiver unit 2401.

For example, the communication apparatus 2400 may be specifically the terminal device in the foregoing embodiment, a processor, a chip, or a chip system in the terminal device, a functional module, or the like. Alternatively, the communication apparatus 2400 may be specifically the network device in the foregoing embodiment, a processor, a chip, or a chip system of the network device, a functional module, or the like.

In an embodiment, when the communication apparatus 2400 is configured to implement the function of the terminal device in the embodiment shown in FIG. 2, the transceiver unit 2401 may implement the transmitting and receiving operations (or the transmission operation) performed by the terminal device in the embodiment shown in FIG. 2. The processing unit 2402 may implement other operations performed by the terminal device in the embodiment shown in FIG. 2 except the transmitting and receiving operations. For detailed related descriptions, refer to related descriptions in the foregoing embodiment shown in FIG. 2. Details are not described herein again.

In another embodiment, when the communication apparatus 2400 is configured to implement the function of the network device in the embodiment shown in FIG. 2, the transceiver unit 2401 may implement the transmitting and receiving operations performed by the network device in the embodiment shown in FIG. 2. The processing unit 2402 may implement other operations that are performed by the network device in the embodiment shown in FIG. 2 except the transmitting and receiving operations. For detailed related descriptions, refer to related descriptions in the foregoing embodiment shown in FIG. 2. Details are not described herein again.

It should be noted that, in embodiments of this application, unit division is an example, and is merely logical function division. In an actual implementation, another division manner may be used. Functional units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of the software functional unit and sold or used as an independent product, the integrated unit may be stored in a computer-readable storage medium. Based on such an understanding, the technical solutions of this application essentially, or the part making a contribution, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on the foregoing embodiments, an embodiment of this application further provides a communication apparatus. Refer to FIG. 25. The communication apparatus 2500 may include a transceiver 2501 and a processor 2502. Optionally, the communication apparatus 2500 may further include a memory 2503. The memory 2503 may be disposed inside the communication apparatus 2500, or may be disposed outside the communication apparatus 2500. The processor 2502 may control the transceiver 2501 to receive and transmit data (information or a message).

Specifically, the processor 2502 may be a central processing unit (central processing unit, CPU), a network processor (network processor, NP), or a combination of a CPU and an NP. The processor 2502 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The transceiver 2501, the processor 2502, and the memory 2503 are connected to each other. Optionally, the transceiver 2501, the processor 2502, and the memory 2503 are connected to each other through a bus 2504. The bus 2504 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 25, but this does not mean that there is only one bus or only one type of bus.

In an optional implementation, the memory 2503 is configured to store a program and the like. Specifically, the program may include program code, and the program code includes computer operation instructions. The memory 2503 may include a RAM, and may further include a non-volatile memory (non-volatile memory), for example, one or more disk memories. The processor 2502 executes the application program stored in the memory 2503, to implement the foregoing function, so as to implement a function of the communication apparatus 2500.

For example, the communication apparatus 2500 may be the terminal device in the foregoing embodiment, or may be the network device in the foregoing embodiment.

In an embodiment, when the communication apparatus 2500 implements the function of the terminal device in the embodiment shown in FIG. 2, the transceiver 2501 may implement the transmitting and receiving operations (or the transmission operation) performed by the terminal device in the embodiment shown in FIG. 2. The processor 2502 may implement other operations that are performed by the terminal device in the embodiment shown in FIG. 2 except the transmitting and receiving operations. For detailed related descriptions, refer to related descriptions in the foregoing embodiment shown in FIG. 2. Details are not described herein again.

In an embodiment, when the communication apparatus 2500 is configured to implement the function of the network device in the embodiment shown in FIG. 2, the transceiver 2501 may implement the transmitting and receiving operations performed by the network device in the embodiment shown in FIG. 2. The processor 2502 may implement other operations that are performed by the network device in the embodiment shown in FIG. 2 except the transmitting and receiving operations. For detailed related descriptions, refer to related descriptions in the foregoing embodiment shown in FIG. 2. Details are not described herein again.

Based on the foregoing embodiments, an embodiment of this application further provides a communication system. The communication system may include a terminal device, a network device, and the like.

An embodiment of this application further provides a computer-readable storage medium. The computer-readable storage medium is configured to store a computer program. When the computer program is executed by a computer, the computer may implement the scheduling request transmission method provided in the foregoing method embodiment.

An embodiment of this application further provides a computer program product. The computer program product is configured to store a computer program. When the computer program is executed by a computer, the computer may implement the scheduling request transmission method provided in the foregoing method embodiment.

An embodiment of this application further provides a chip, including a processor. The processor is coupled to a memory, and is configured to invoke a program in the memory, so that the chip implements the scheduling request transmission method provided in the foregoing method embodiment.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Obviously, a person skilled in the art can make various modifications and variations to this application without departing from the scope of this application. This application is intended to cover these modifications and variations of this application provided that they fall within the scope of protection defined by the following claims and their equivalent technologies.

**Claims**

1. A scheduling request transmission method, comprising:

   determining, by a terminal device, that a first uplink channel exists in a first time domain range, wherein the first time domain range is related to a time domain position of a physical uplink control channel PUCCH comprising a scheduling request, and the first uplink channel is any one of the following: a PUCCH comprising a hybrid automatic repeat request HARQ feedback, a PUCCH comprising a channel state information CSI report, or a physical uplink shared channel PUSCH;
   combining, by the terminal device, the scheduling request with information comprised in the first uplink channel, to obtain first information; and
   transmitting, by the terminal device, the first information to a network device.

2. The method according to claim 1, wherein the first time domain range is a first time window and/or a second time window;

   a start moment of the first time window is a moment triggered by receiving a scheduling request of a media access control MAC layer of the terminal device by a physical PHY layer of the terminal device, and an end moment of the first time window is the time domain position of the PUCCH comprising the scheduling request, or an end moment of the first time window is the time domain position of the PUCCH comprising the scheduling request, and a time domain length of the first time window is a first time domain length; and
   a start moment of the second time window is the time domain position of the PUCCH comprising the scheduling request, and a time domain length of the second time window is a second time domain length.

3. The method according to claim 1 or 2, wherein when a plurality of uplink channels exist in the first time domain range, and the first uplink channel is an uplink channel with an earliest time domain position in the plurality of uplink channels, or the first uplink channel is an uplink channel that is in the plurality of uplink channels and whose time domain position is at a minimum interval with the time domain position of the PUCCH comprising the scheduling request.

4. The method according to any one of claims 1 to 3, wherein a slot in which the first uplink channel is located comprises a scheduling request occasion.

5. The method according to any one of claims 1 to 4, wherein when a format of the PUCCH comprising the scheduling request is a format 0 or a format 1, the first uplink channel is the PUCCH comprising the HARQ feedback, and a format of the PUCCH comprising the HARQ feedback is the format 0,
   the combining, by the terminal device, the scheduling request with information comprised in the first uplink channel, to obtain first information comprises:

   concatenating, by the terminal device, the scheduling request and the HARQ feedback to obtain the first information; and
   the transmitting, by the terminal device, the first information to a network device comprises:
   mapping, by the terminal device, the first information to a first cyclic shift value, and transmitting the first information to the network device based on the first cyclic shift value.

6. The method according to any one of claims 1 to 4, wherein when a format of the PUCCH comprising the scheduling request is a format 0 or a format 1, the first uplink channel is the PUCCH comprising the HARQ feedback, and a format of the PUCCH comprising the HARQ feedback is a format 2, a format 3, or a format 4,
   the combining, by the terminal device, the scheduling request with information comprised in the first uplink channel, to obtain first information comprises:

   concatenating, by the terminal device, the scheduling request and the HARQ feedback to obtain the first information; and
   the transmitting, by the terminal device, the first information to a network device comprises:
   transmitting, by the terminal device, the first information to the network device through the first uplink channel.

7. The method according to any one of claims 1 to 4, wherein when a format of the PUCCH comprising the scheduling request is a format 0 or a format 1, the first uplink channel is the PUCCH comprising the CSI report, and a format of the PUCCH comprising the CSI report is a format 2, a format 3, or a format 4,
the combining, by the terminal device, the scheduling request with information comprised in the first uplink channel, to obtain first information comprises:

concatenating, by the terminal device, the scheduling request and the CSI report to obtain the first information; and
the transmitting, by the terminal device, the first information to a network device comprises:
transmitting, by the terminal device, the first information to the network device through the first uplink channel.

8. The method according to any one of claims 1 to 4, wherein when a format of the PUCCH comprising the scheduling request is a format 0, the first uplink channel is the PUCCH comprising the HARQ feedback, and a format of the PUCCH comprising the HARQ feedback is a format 1,
the combining, by the terminal device, the scheduling request with information comprised in the first uplink channel, to obtain first information comprises:

concatenating, by the terminal device, the scheduling request and the HARQ feedback to obtain the first information; and
the transmitting, by the terminal device, the first information to a network device comprises:
mapping, by the terminal device, the first information to a second cyclic shift value, and transmitting the first information to the network device based on the second cyclic shift value.

9. The method according to any one of claims 1 to 4, wherein when a format of the PUCCH comprising the scheduling request is a format 1, the first uplink channel is the PUCCH comprising the HARQ feedback, and a format of the PUCCH comprising the HARQ feedback is the format 1, the transmitting, by the terminal device, the first information to a network device comprises:
when determining that a resource of the PUCCH of the format 1 comprising the scheduling request exists at a time domain position of the first uplink channel, transmitting, by the terminal device, the first information to the network device in a channel selection manner.

10. The method according to any one of claims 1 to 4, wherein when a format of the PUCCH comprising the scheduling request is a format 0 or a format 1, and the first uplink channel is the PUSCH, the combining, by the terminal device, the scheduling request with information comprised in the first uplink channel, to obtain first information comprises:
concatenating, by the terminal device, the scheduling request and information comprised in the PUSCH to obtain the first information.

11. The method according to any one of claims 1 to 4, wherein when a format of the PUCCH comprising the scheduling request is a format 0 or a format 1, and the first uplink channel is the PUSCH, the combining, by the terminal device, the scheduling request with information comprised in the first uplink channel, to obtain first information comprises:
puncturing, by the terminal device, the PUSCH, and mapping the scheduling request to a punctured position of the PUSCH, to obtain the first information.

12. The method according to any one of claims 1 to 11, wherein before the combining, by the terminal device, the scheduling request with information comprised in the first uplink channel, to obtain first information, the method further comprises:
determining, by the terminal device, that a reference signal received power RSRP transmitted to the network device after a reference signal is received from the network device is greater than an RSRP threshold, wherein the RSRP is determined by the terminal device based on the reference signal.

13. The method according to any one of claims 1 to 12, wherein the transmitting, by the terminal device, the first information to a network device comprises:
transmitting, by the terminal device, the first information to the network device by using a first transmit power, wherein the first transmit power is greater than an original transmit power of the first uplink channel, or the first transmit power is determined based on an original transmit power of the first uplink channel and an original transmit power of the PUCCH comprising the scheduling request.

14. A scheduling request transmission method, comprising:

determining, by a network device, that a first uplink channel exists in a first time domain range, wherein the first time domain range is related to a time domain position of a physical uplink control channel PUCCH comprising a scheduling request, and the first uplink channel is any one of the following: a PUCCH comprising a hybrid automatic repeat request HARQ feedback, a PUCCH comprising a channel state information CSI report, or a physical uplink shared channel PUSCH; and

receiving, by the network device, first information from a terminal device, wherein the first information is obtained by the terminal device by combining the scheduling request and information comprised in the first uplink channel.

15. The method according to claim 14, wherein the first time domain range is a first time window and/or a second time window;

a start moment of the first time window is a moment triggered by receiving a scheduling request of a media access control MAC layer of the terminal device by a physical PHY layer of the terminal device, and an end moment of the first time window is a start position of the time domain position of the PUCCH comprising the scheduling request, or an end moment of the first time window is a start position of the time domain position of the PUCCH comprising the scheduling request, and a time domain length of the first time window is a first time domain length; and

a start moment of the second time window is an end position of the time domain position of the PUCCH comprising the scheduling request, and a time domain length of the second time window is a second time domain length.

16. The method according to claim 14 or 15, wherein when a plurality of uplink channels exist in the first time domain range, and the first uplink channel is an uplink channel with an earliest time domain position in the plurality of uplink channels, or the first uplink channel is an uplink channel that is in the plurality of uplink channels and whose time domain position is at a minimum interval with the time domain position of the PUCCH comprising the scheduling request.

17. The method according to any one of claims 14 to 16, wherein a slot in which the first uplink channel is located comprises a scheduling request occasion.

18. The method according to any one of claims 14 to 17, wherein when a format of the PUCCH comprising the scheduling request is a format 0 or a format 1, the first uplink channel is the PUCCH comprising the HARQ feedback, and a format of the PUCCH comprising the HARQ feedback is the format 0, the first information is obtained by the terminal device by concatenating the scheduling request and the HARQ feedback; and

the receiving, by the network device, first information from a terminal device comprises:

receiving, by the network device, the first information transmitted by the terminal device based on a first cyclic shift value, wherein the first cyclic shift value is obtained by the terminal device by mapping the first information.

19. The method according to any one of claims 14 to 17, wherein when a format of the PUCCH comprising the scheduling request is a format 0 or a format 1, the first uplink channel is the PUCCH comprising the HARQ feedback, and a format of the PUCCH comprising the HARQ feedback is a format 2, a format 3, or a format 4, the first information is obtained by the terminal device by concatenating the scheduling request and the HARQ feedback; and

the receiving, by the network device, first information from a terminal device comprises:

receiving, by the network device, the first information transmitted by the terminal device through the first uplink channel.

20. The method according to any one of claims 14 to 17, wherein when a format of the PUCCH comprising the scheduling request is a format 0 or a format 1, the first uplink channel is the PUCCH comprising the CSI report, and a format of the PUCCH comprising the CSI report is a format 2, a format 3, or a format 4, the first information is obtained by the terminal device by concatenating the scheduling request and the CSI report; and

the receiving, by the network device, first information from a terminal device comprises:

receiving, by the network device, the first information transmitted by the terminal device through the first uplink channel.

21. The method according to any one of claims 14 to 17, wherein when a format of the PUCCH comprising the scheduling request is a format 0, the first uplink channel is the PUCCH comprising the HARQ feedback, and a format of the PUCCH comprising the HARQ feedback is a format 1, the first information is obtained by the terminal device by concatenating the scheduling request and the HARQ feedback; and

the receiving, by the network device, first information from a terminal device comprises:

receiving, by the network device, the first information transmitted by the terminal device based on a second cyclic shift value, wherein the second cyclic shift value is obtained by the terminal device by mapping the first information.

22. The method according to any one of claims 14 to 17, wherein when a format of the PUCCH comprising the scheduling request is a format 1, the first uplink channel is the PUCCH comprising the HARQ feedback, and a format of the PUCCH comprising the HARQ feedback is the format 1, the receiving, by the network device, first information from a terminal device comprises:

when a resource of the PUCCH of the format 1 used to transmit the scheduling request exists at a time domain position of the first uplink channel, receiving the first information transmitted by the terminal device in a channel selection manner.

23. The method according to any one of claims 14 to 17, wherein when a format of the PUCCH comprising the scheduling request is a format 0 or a format 1, and the first uplink channel is the PUSCH, the first information is obtained by the terminal device by concatenating the scheduling request and information comprised in the PUSCH.

24. The method according to any one of claims 14 to 17, wherein when a format of the PUCCH comprising the scheduling request is a format 0 or a format 1, and the first uplink channel is the PUSCH, the first information is obtained by the terminal device by puncturing the PUSCH and mapping the scheduling request to a punctured position of the PUSCH.

25. The method according to any one of claims 14 to 24, wherein before the receiving, by the network device, first information from a terminal device, the method further comprises:

determining, by the network device, that a reference signal received power RSRP from the terminal device is greater than an RSRP threshold, wherein the RSRP is transmitted after the terminal device receives a reference signal from the network device, and the RSRP is determined by the terminal device based on the reference signal.

26. A terminal device, comprising a memory and a processor, wherein

the memory is configured to store computer instructions; and
the processor is coupled to the memory, and is configured to invoke the computer instructions in the memory, so that the terminal device performs the method according to any one of claims 1 to 13.

27. A network device, comprising a memory and a processor, wherein

the memory is configured to store computer instructions; and
the processor is coupled to the memory, and is configured to invoke the computer instructions in the memory, so that the network device performs the method according to any one of claims 14 to 25.

28. A computer-readable storage medium, wherein the computer-readable storage medium stores computer-executable instructions, and when the computer-executable instructions are invoked by a computer, the computer is enabled to perform the methods according to any one of claims 1 to 25.

Network device

Terminal device

FIG. 1

| Terminal device | | Network device |

201: Determine that a first uplink channel exists in a first time domain range, where the first time domain range is related to a time domain position of a PUCCH including a scheduling request

202: Combine the scheduling request with information included in the first uplink channel, to obtain first information

203: First information

FIG. 2

Moment triggered by
receiving a scheduling
request of a MAC layer
of a terminal device by a      Time domain position
PHY layer of the               of a PUCCH including
terminal device                the scheduling request

Second time
domain length

First time window          Second time window

FIG. 3

Moment triggered by
receiving a scheduling
request of a MAC layer
of a terminal device by a                       Time domain position
PHY layer of the               First uplink    of a PUCCH including
terminal device                channel         the scheduling request

First time window

FIG. 4

First uplink
channel

Time domain position
of a PUCCH including
a scheduling request

First time domain length

FIG. 5

Time domain position
of a PUCCH including
a scheduling request

First uplink
channel

Second time domain length

FIG. 6

Time domain
position of DCI

Time domain position
of a PUCCH including
a scheduling request

First uplink
channel

Second time domain length

FIG. 7

Uplink
channel

Time domain position
of a PUCCH including
a scheduling request

Uplink
channel

First uplink channel

FIG. 8

Time domain position
of a PUCCH including
a scheduling request

Scheduling
request occasion

Uplink channel

First uplink
channel

FIG. 9

| Terminal device | | Network device |
|---|---|---|

First message, used to configure or enable a function of the terminal device for combining, for transmission, a scheduling request and information included in a first uplink channel

Combine, for transmission, the scheduling request and the information included in the first uplink channel

FIG. 10

| Terminal device | | Network device |
|---|---|---|

Second message, used to request to enable a function of combining, for transmission, a scheduling request and information included in a first uplink channel

First message, used to configure or enable the function of the terminal device for combining, for transmission, the scheduling request and the information included in the first uplink channel

Combine, for transmission, the scheduling request and the information included in the first uplink channel

FIG. 11

```
┌─────────────────┐                              ┌─────────────────┐
│                 │                              │                 │
│ Terminal device │                              │ Network device  │
│                 │                              │                 │
└─────────────────┘                              └─────────────────┘
         │                                                │
         │     First message, used to configure or        │
         │     enable a function of the terminal          │
         │◄─── device for combining, for transmission, ───┤
         │     a scheduling request and information        │
         │     included in a first uplink channel          │
         │                                                │
         │     Third message, indicating the terminal     │
         │◄─── device to combine, for transmission, the ──┤
         │     scheduling request and the information      │
         │     included in the first uplink channel        │
         │                                                │
         │     Combine, for transmission, the scheduling   │
         │──── request and the information included in ───►│
         │     the first uplink channel                    │
         │                                                │
```

FIG. 12

| Terminal device | | Network device |
|---|---|---|

Second message, used to request to enable a function of combining, for transmission, a scheduling request and information included in a first uplink channel

First message, used to configure or enable the function of the terminal device for combining, for transmission, the scheduling request and the information included in the first uplink channel

Third message, indicating the terminal device to combine, for transmission, the scheduling request and the information included in the first uplink channel

Combine, for transmission, the scheduling request and the information included in the first uplink channel

FIG. 13

A MAC triggers
a PHY to transmit an SR

SR occasion (occasion)

Time window 1
(window 1)

Time window 2
(window 2)

FIG. 14

A MAC triggers
a PHY to
transmit an SR

PUCCH carrying an
HARQ-ACK, PUCCH
carrying a CSI report,
or PUSCH carrying no
UL-SCH

SR occasion
(occasion)

Time window 1
(window 1)

Time window 2
(window 2)

FIG. 15

A MAC triggers
a PHY to
transmit an SR

SR occasion (occasion)

PUCCH
carrying a
CSI report

Time window 1
(window 1)

Time window 2
(window 2)

FIG. 16

A MAC
triggers
a PHY to
transmit an
SR

DCI

SR occasion
(occasion)

PUCCH carrying an
HARQ-ACK or
PUCCH carrying a
CSI report

Time window 1
(window 1)

Time window 2
(window 2)

FIG. 17

Other uplink
transmission

SR occasion
(occasion)

Other uplink
transmission

FIG. 18

SR occasion (occasion)

Other uplink
transmission

FIG. 19

A base station may configure enabling of this function by using an RRC message

UE transmits an SR according to methods in first to third specific examples

The base station receives an SR according to methods in first to third specific examples

FIG. 20

UE transmits information to request for enabling of this function

A base station may configure enabling of this function by using an RRC message

The UE transmits an SR according to methods in first to third specific examples

The base station receives an SR according to methods in first to third specific examples

FIG. 21

```
┌─────────────────────────┐
│   A base station may     │
│ configure enabling of this│
│ function by using an RRC │
│        message           │
└─────────────────────────┘
            │
            ▼
┌─────────────────────────┐
│   The base station may   │
│  indicate, by using DCI, │
│  whether to use the      │
│        function          │
└─────────────────────────┘
     │               │
     ▼               ▼
┌──────────────┐  ┌──────────────┐
│ UE transmits │  │ The base     │
│ an SR        │  │ station      │
│ according to │  │ receives an  │
│ methods in   │  │ SR according │
│ first to     │  │ to methods in│
│ third specific│ │ first to     │
│ examples     │  │ third specific│
│              │  │ examples     │
└──────────────┘  └──────────────┘
```

FIG. 22

```
┌─────────────────────────┐
│   UE transmits information to │
│   request for enabling of this │
│          function        │
└─────────────────────────┘
              │
              ▼
┌─────────────────────────┐
│     A base station may    │
│  configure enabling of this │
│  function by using an RRC │
│          message          │
└─────────────────────────┘
              │
              ▼
┌─────────────────────────┐
│    The base station may   │
│   indicate, by using DCI, │
│  whether to use the function │
└─────────────────────────┘
```

| The UE transmits an SR according to methods in first to third specific examples | The base station receives an SR according to methods in first to third specific examples |

FIG. 23

2400

Communication apparatus

2401

Transceiver unit

2402

Processing unit

FIG. 24

2500

Communication apparatus

2501

Transceiver

2502

Processor

2504

2503

Memory

FIG. 25

## INTERNATIONAL SEARCH REPORT

| International application No. |
| --- |
| **PCT/CN2021/138238** |

| | |
| --- | --- |
| **A.** | **CLASSIFICATION OF SUBJECT MATTER** |
| | H04W 72/04(2009.01)i |

According to International Patent Classification (IPC) or to both national classification and IPC

| | |
| --- | --- |
| **B.** | **FIELDS SEARCHED** |

Minimum documentation searched (classification system followed by classification symbols)

　H04W, H04L, H04Q

Documentation searched other than minimum documentation to the extent that such documents are included in the fields searched

Electronic data base consulted during the international search (name of data base and, where practicable, search terms used)

　WPI, EPODOC, CNPAT, CNKI, 3GPP: 调度请求, 物理上行共享信道, 信道状态信息, 时域, 时间窗, 时机, 非重叠, 复用, 合并, scheduling request, SR, physical uplink shared channel, PUSCH, PUCCH, channel state information, CSI, UCI, occasion, window, multiplex, merge, non-overlap

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 111971919 A (QUALCOMM INC.) 20 November 2020 (2020-11-20)<br>　　description paragraphs 79-92 | 1-28 |
| X | LG ELECTRONICS. "Remaining Issues on Short-Duration PUCCH"<br>*3GPP TSG RAN WG1 Meeting #93 R1-1806620*, 25 May 2018 (2018-05-25),<br>　　section 2 | 1-28 |
| X | HUAWEI et al. "3GPP TSG RAN WG1 Meeting #92 R1-1802690"<br>*Handling of PUCCH transmission with partial overlap*, 02 March 2018 (2018-03-02),<br>　　sections 2-3 | 1-28 |
| A | CN 110035535 A (HUAWEI TECHNOLOGIES CO., LTD.) 19 July 2019 (2019-07-19)<br>　　entire document | 1-28 |
| A | WO 2019237259 A1 (HUAWEI TECHNOLOGIES CO., LTD.) 19 December 2019<br>(2019-12-19)<br>　　entire document | 1-28 |

☐ Further documents are listed in the continuation of Box C.　　☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **01 March 2022** | **09 March 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/138238**

| Patent document cited in search report | | | Publication date (day/month/year) | Patent family member(s) | | | Publication date (day/month/year) |
|---|---|---|---|---|---|---|---|
| CN | 111971919 | A | 20 November 2020 | EP | 3776968 | A1 | 17 February 2021 |
| | | | | WO | 2019192459 | A1 | 10 October 2019 |
| | | | | US | 2021051509 | A1 | 18 February 2021 |
| | | | | WO | 2019192007 | A1 | 10 October 2019 |
| | | | | IN202027039030 | | A | 26 March 2021 |
| CN | 110035535 | A | 19 July 2019 | EP | 3726912 | A1 | 21 October 2020 |
| | | | | BR | 112020014124 | A2 | 01 December 2020 |
| | | | | US | 2020344788 | A1 | 29 October 2020 |
| | | | | US | 2021227565 | A1 | 22 July 2021 |
| | | | | WO | 2019137503 | A1 | 18 July 2019 |
| | | | | IN202037026368 | | A | 07 August 2020 |
| WO | 2019237259 | A1 | 19 December 2019 | US | 2021100016 | A1 | 01 April 2021 |
| | | | | EP | 3796706 | A1 | 24 March 2021 |
| | | | | CN | 112262591 | A | 22 January 2021 |
| | | | | IN202027054348 | | A | 16 July 2021 |

Form PCT/ISA/210 (patent family annex) (January 2015)

**EP 4 262 301 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110070788

- CN 202110280935X